# EUROPEAN PATENT APPLICATION

(11) **EP 4 596 515 A1**
(43) Date of publication of application: **06.08.2025**
(21) Application number: 23872561.8
(22) Date of filing: 28.09.2023
(51) Int. Cl.: C03C 27/12, B32B 17/10, B32B 27/08, B32B 27/36, B60J 1/00

(54) **INTERMEDIATE FILM FOR LAMINATED GLASS, AND LAMINATED GLASS**

(30) Priority: 30.09.2022 JP 2022158980
(71) Applicant: SEKISUI CHEMICAL CO., LTD., Osaka-shi Osaka 530-8565 (JP)
(72) Inventor: ISHIDA, Jun, 6045JB Roermond (NL)
(74) Representative: Ter Meer Steinmeister & Partner
(86) International application number: PCT/JP2023/035520
(87) International publication number: WO 2024/071341

(57) **Abstract**

An interlayer film for laminated glass of the present invention includes a functional film and a first polymer layer that is provided on one front surface of the functional film and constitutes an outermost layer, wherein an outer surface of the first polymer layer has a surface roughness (Rzjis94) of 1 µm or more and 100 µm or less.. According to the present invention, an interlayer film for laminated glass that has excellent degassing properties during the production of laminated glass and can suppress optical distortion can be provided.

## Description

### Technical Field

The present invention relates to an interlayer film for laminated glass and laminated glass.

### Background Art

Laminated glass is safe and does not cause glass shards to scatter even if damaged by an external impact, and is thus widely used for the window glass of a vehicle such as an automobile, a railway carriage, an aircraft, and a ship, or for the window glass of a building. Laminated glass in which generally an interlayer film for laminated glass formed of a thermoplastic resin is interposed between a pair of glass sheets and integrated is widely known.

In recent years, research is being actively conducted in the use of interlayer films for laminated glass in vehicles, buildings, and the like by providing an interlayer film with a functional film having specific optical properties.

For example, PTL1 discloses an invention relating to windshield glass in which an interlayer film for laminated glass, a linearly polarized light reflector, and a heat seal layer are arranged between two sheets of curved glass. Further, an embodiment is disclosed in which the windshield glass is used for a head-up display (HUD) by using a linearly polarized light reflector that can selectively reflect P-polarized light. An HUD is a device that displays various information such as a map, traveling speed, and vehicle status in the field of vision of the driver by reflecting an image on the windshield of the vehicle.

Further, PTL2 discloses laminated glass having an interlayer film between a glass sheet on an external side of a vehicle and a glass sheet on an inner side of the vehicle, wherein films such as an interlayer film and a P-polarized light reflective film and an adhesive layer are arranged between the two glass sheets. It is also disclosed that distortion of a HUD image can be reduced by setting the thickness of the adhesive layer within a specific range.

### Citation List

### Patent Literature

PTL1: 2021/200697 A1
PTL2: 2019-172512 A

### Summary of Invention

### Technical Problem

When an interlayer film for laminated glass is inserted between two sheets of glass and bonded together by pressure, bubbles may be formed between the glass and the interlayer film. In order to prevent this, it is possible to improve degassing properties by forming unevenness on the front surface of the interlayer film for laminated glass.

However, an interlayer film for laminated glass having a functional film like that described above generally has a structure in which the functional film is sandwiched between polymer layers, and in many cases the functional film is arranged close to one of the front surfaces. If an attempt is made to form unevenness, a part of the functional film may deform, resulting in optical distortion.

Accordingly, an object of the present invention is to provide an interlayer film for laminated glass that includes a functional film, which has excellent degassing properties during the production of laminated glass and can suppress optical distortion.

### Solution to Problem

As a result of extensive studies, the present inventors have found that the above-described problem can be solved by an interlayer film for laminated glass that includes a functional film and a first polymer layer that is provided on one front surface of the functional film and constitutes an outermost layer, wherein an outer surface of the first polymer layer has a surface roughness (Rzjis94) that is within a specific range, thereby completing the present invention. That is, the subject matter of the present invention is as follows.

[1] An interlayer film for laminated glass, including:
   a functional film; and
   a first polymer layer that is provided on one front surface side of the functional film and constitutes an outermost layer,
   an outer surface of the first polymer layer having a surface roughness (Rzjis94) of 1 µm or more and 100 µm or less.
[2] The interlayer film for laminated glass according to the above [1], including a second polymer layer that constitutes an outermost layer on a side opposite to the first polymer layer, wherein an outer surface of the second polymer layer has a surface roughness (Rzjis94) of 1 µm or more and 100 µm or less.
[3] The interlayer film for laminated glass according to the above [1] or [2], including three or more polymer layers.
[4] The interlayer film for laminated glass according to the above [2] or [3], wherein a difference in surface roughness (Ra) of the outer surface of the first polymer layer and the outer surface of the second polymer layer is 1 µm or more.
[5] The interlayer film for laminated glass according to any of the above [2] to [4], wherein a difference in thickness between the first polymer layer and the second polymer layer is 1 µm or more and 1000 µm or less.
[6] The interlayer film for laminated glass according to any of the above [1] to [5], wherein the first polymer layer and/or the second polymer layer includes at least one thermoplastic resin selected from the group consisting of a polyvinyl acetal resin and an ethylene-vinyl acetate copolymer resin.
[7] The interlayer film for laminated glass according to any of the above [1] to [6], wherein at least one polymer layer of the polymer layers included in the interlayer film for laminated glass has a different thickness at one end from the thickness at the other end.
[8] The interlayer film for laminated glass according to any of the above [1] to [7], wherein the functional film is a film having a function of absorbing or reflecting specific light.
[9] The interlayer film for laminated glass according to any of the above [1] to [8], wherein the functional film includes a polyethylene terephthalate resin.
[10] The interlayer film for laminated glass according to any of the above [1] to [9], wherein the functional film includes a metal compound.
[11] The interlayer film for laminated glass according to any of the above [1] to [10], wherein the functional film includes a P-polarized light reflective film, a hologram film, a heat-ray reflective film, a light control film, or a solar film.
[12] The interlayer film for laminated glass according to any of the above [2] to [11], wherein the outer surface of the first polymer layer and the outer surface of the second polymer layer have a regular shape or a random shape.
[13] The interlayer film for laminated glass according to any of the above [1] to [12], wherein at least one front surface is protected by a protective release film.
[14] The interlayer film for laminated glass according to the above [13], wherein the protective release film has a surface roughness (Rzjis94) of 1 µm or more and 100 µm or less.
[15] The interlayer film for laminated glass according to any of the above [1] to [14], wherein when a thickness distribution curve A obtained by measuring the thickness at equal intervals in a region of 80% of the region including the functional film is compared with a thickness distribution curve B, which is a smoothed thickness distribution curve obtained by subjecting the thickness distribution curve A to moving average processing, the interlayer film has a region, where an absolute value of a displacement in the thickness of the thickness distribution curve A with respect to the thickness of the thickness distribution curve B is 50 µm or less, of 70% or more.
[16] The interlayer film for laminated glass according to any of the above [1] to [15], wherein the functional film has a thickness of 0.05 µm or more.
[17] The interlayer film for laminated glass according to any of the above [1] to [16], including a polymer layer having a glass transition temperature (Tg) of less than 15°C.
[18] The interlayer film for laminated glass according to any of the above [2] to [17], wherein the functional film, the first polymer layer, and the second polymer layer have an average refractive index of 1.40 or more and 1.60 or less.
[19] The interlayer film for laminated glass according to any of the above [1] to [18], on which product information is printed.
[20] The interlayer film for laminated glass according to any of the above [1] to [19], wherein a proportion of the area of the functional film to the area of the interlayer film for laminated glass when viewed from a thickness direction is 50% or more.
[21] The interlayer film for laminated glass according to any of the above [1] to [20], including an air layer between the functional film and a polymer layer.
[22] Laminated glass including:
   the interlayer film for laminated glass according to any of the above [1] to [21]; and
   a pair of laminated glass members, wherein
   the interlayer film for laminated glass is arranged between the pair of laminated glass members, and the laminated glass members are either curved glass or flat glass.
[23] A method for producing the interlayer film for laminated glass according to any of the above [1] to [21], wherein roughness is imparted on the front surface of the polymer layer by any of the following methods (1) to (3):
   (1) a method of transferring a roughness profile of a protective release film;
   (2) a method of transferring a roughness profile of an engraving roll; and
   (3) a method of transferring a roughness profile of an engraving plate.

### Advantageous Effect of Invention

According to the present invention, an interlayer film for laminated glass that has excellent degassing properties during the production of laminated glass and can suppress optical distortion can be provided.

### Brief Description of Drawings

[Fig. 1] Fig. 1 is a schematic cross-sectional view showing an embodiment of an interlayer film for laminated glass of the present invention.
[Fig. 2] Fig. 2 is a cross-sectional view schematically showing the shape of the front surface of the polymer layer.
[Fig. 3] Fig. 3 is a cross-sectional view schematically showing the shape of the front surface of the polymer layer.
[Fig. 4] Fig. 4 is a schematic cross-sectional view showing another embodiment of the interlayer film for laminated glass of the present invention.
[Fig. 5] Fig. 5 is a schematic cross-sectional view showing another embodiment of the interlayer film for laminated glass of the present invention.
[Fig. 6] Fig. 6 is a schematic cross-sectional view showing another embodiment of the interlayer film for laminated glass of the present invention.
[Fig. 7] Fig. 7 is a schematic cross-sectional view showing an embodiment of an interlayer film for laminated glass of the present invention that includes a wedge-shaped polymer layer.
[Fig. 8] Fig. 8 is a schematic cross-sectional view showing an embodiment of an interlayer film for laminated glass in which the functional film region is small.
[Fig. 9] Fig. 9 is a schematic cross-sectional view showing a state in which an air layer is formed between a functional film and a polymer layer.
[Fig. 10] Fig. 10 is a schematic cross-sectional view showing a state in which an air layer is formed between a functional film and a polymer layer.
[Fig. 11] Fig. 11 is a schematic cross-sectional view showing an embodiment of an interlayer film for laminated glass of the present invention that includes a protective release film.
[Fig. 12] Fig. 12 is a diagram showing a method for evaluating the proportion of a region having a small thickness displacement.
[Fig. 13] Fig. 13 is a top view showing an embodiment of the interlayer film for laminated glass of the present invention on which product information is printed.
[Fig. 14] Fig. 14 is a diagram showing a mode in which surface roughness profile is formed on a polymer layer by a protective release film.
[Fig. 15] Fig. 15 is a diagram showing a mode in which surface roughness profile is formed on a polymer layer by an engraving roll.
[Fig. 16] Fig. 16 is a diagram showing a mode in which surface roughness profile is formed on a polymer layer by an engraving plate.

### Description of Embodiments

Hereinafter, the present invention will be described in more detail with reference to embodiments.

### [Interlayer film for laminated glass]

The interlayer film for laminated glass of the present invention has a functional film and a first polymer layer that is provided on one front surface side of the functional film and constitutes an outermost layer, wherein an outer surface of the first polymer layer has a surface roughness (Rzjis94) of 1 µm or more and 100 µm or less.

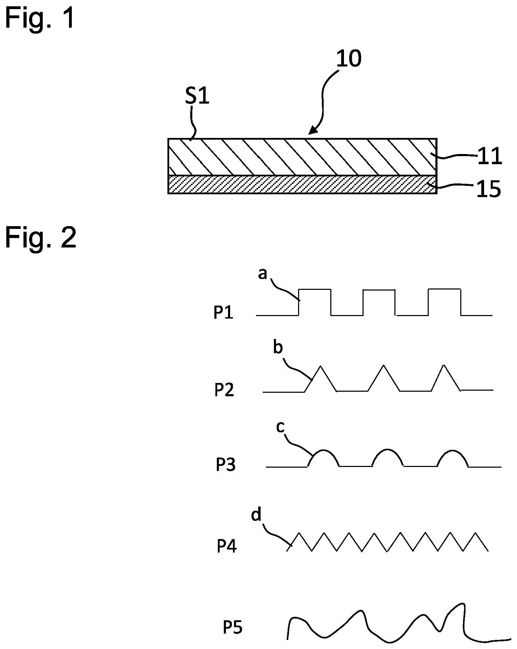

As shown in Fig. 1, one embodiment of the interlayer film for laminated glass of the present invention is an interlayer film 10 for laminated glass having a functional film 15 and a first polymer layer 11 that is provided on one front surface of the functional film. The first polymer layer 11 constitutes the outermost layer of the interlayer film for laminated glass. As used herein, "constituting the outermost layer" means that the first polymer layer 11 is the outermost layer when it is attached to glass, and for example, a protective release film or the like may be attached to the front surface of the polymer layer 11 during storage.

### <Surface roughness>

The surface roughness (Rzjis94) of an outer surface S1 of the first polymer layer is 1 µm or more and 100 µm or less.

If the surface roughness of the outer surface of the first polymer layer is less than 1 µm, degassing properties during laminated glass production will deteriorate, which tends to cause problems such as the formation of bubbles between the interlayer film for laminated glass and the glass. If the surface roughness of the outer surface of the first polymer layer exceeds 100 µm, unevenness tends to be formed on the front surface of the functional film, resulting in optical problems. In addition, if the surface roughness of the polymer layer is too large, unevenness of the polymer layer tends to remain when pressure bonded onto glass, and as a result adhesion between the glass and the interlayer film for laminated glass tends to decrease.

From the viewpoint of degassing properties, the surface roughness of the outer surface of the first polymer layer is preferably 5 µm or more, more preferably 10 µm or more, further preferably 15 µm or more, further preferably 20 µm or more, further preferably 25 µm or more, further preferably is 30 µm or more, and further preferably 40 µm or more. From the viewpoint of suppressing deformation of the functional film and from the viewpoint of not leaving any unevenness in the polymer layer when pressure bonded onto glass, the surface roughness of the outer surface of the first polymer layer is preferably 90 µm or less, more preferably 80 µm or less, further preferably 70 µm or less, and further preferably 60 µm or less.

The surface roughness of the outer surface of the first polymer layer is, with respect to the thickness of the first polymer layer, preferably 95% or less, more preferably 90% or less, further preferably 80% or less, further preferably 70% or less, further 50% or less, further preferably 30% or less, and further preferably 20% or less. By adjusting the surface roughness of the first polymer layer in this way, unevenness is less likely to be formed on the front surface of the functional film, and the occurrence of optical problems can be suppressed.

In the present invention, surface roughness (Rzjis94) means the ten-point average roughness Rz. Rzjis94 is the sum of the average height of the highest peak to the fifth highest peak in a standard length L and the average depth of the deepest valley to the fifth deepest valley.

The larger the value of the "10-point average roughness Rz" is, the rougher the surface is as a whole, and the smaller the value is, the smoother the surface is as a whole. The "ten-point average roughness Rz" is measured in accordance with JIS B 0601-1994. For example, a "Surfcorder SE500A" manufactured by Kosaka Laboratory Ltd. can be used as the measuring instrument for measuring the ten-point average roughness (Rz). More specifically, the ten-point average roughness (Rz) can be calculated using a stylus with a tip radius of 2 µm and a tip angle of 90° under measurement conditions of a cutoff value of 2.5 mm at the time of measurement, a reference length of 2.5 mm, a measurement length of 12.5 mm, a preliminary length of 2.5 mm, and a stylus movement rate of 0.5 mm/sec in an environment of 23°C and 30 RH%. When the front surface of the polymer layer is embossed with linear pattern, the ten-point average roughness (Rz) is measured by moving the stylus toward a direction perpendicular to the direction of the linear pattern.

The shape of the outer surface of the first polymer layer in the interlayer film for laminated glass of the present invention is not particularly limited as long as the surface roughness is within the above-described predetermined range, and the shape may be a regular shape or a random shape. Fig. 2 shows examples of cross-sectional views of the shape of the outer surface of the first polymer layer. In Fig. 2, P1 to P4 are examples of regular shapes, and P5 is an example of a random shape.

P1 in Fig. 2 shows the structure of the outer surface of the polymer layer in which a repeating structure of a flat portion and a projection portion a having a rectangular cross section is formed. P2 shows the structure of the outer surface of the polymer layer in which a repeating structure of a flat portion and a projection portion b having a triangular cross section is formed. P3 shows the structure of the outer surface of the polymer layer in which a repeating structure of a flat portion and a convex portion c having a semicircular cross section is formed. P4 shows the outer surface of the polymer layer in which projection portions d having a triangular cross section are continuously formed. P5 shows the structure of the outer surface of the polymer layer in which unevenness is randomly formed. The outer surface of the polymer layer may have a shape that is a combination of a plurality of the shapes P1 to P5, or may have a shape other than P1 to P5.

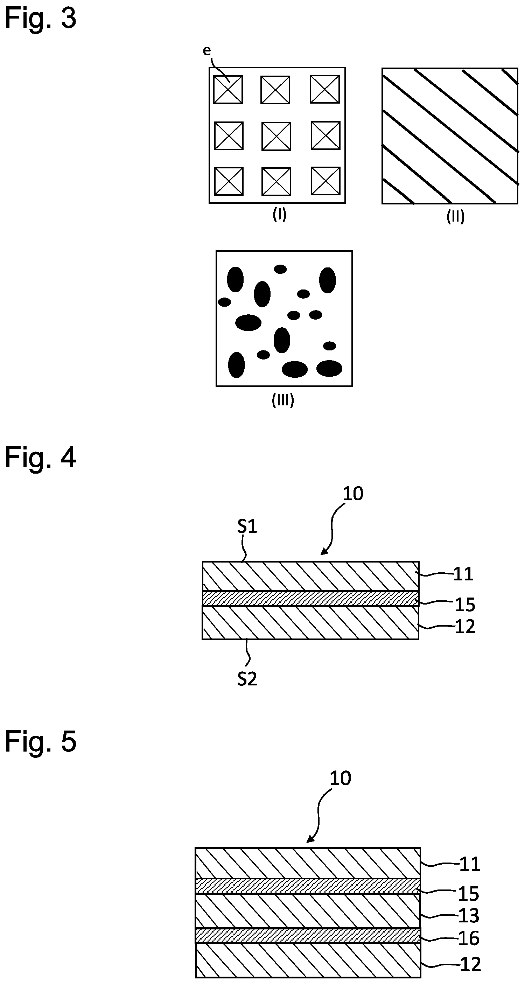

Further, Fig. 3 shows a schematic diagram of the outer surface of the first polymer layer viewed from above. As shown in Fig. 3(I), the outer surface of the polymer layer may have convex shapes (or concave shapes) regularly arranged in the vertical and horizontal directions of the first polymer layer. In Fig. 3(I), a square pyramid is shown as the convex shape (or concave shape), but other shapes may be used. Further, as shown in Fig. 3(II), grooves (or linear protrusions) may be formed at regular intervals. In addition, as shown in Fig. 3(III), concave portions or convex portions may be formed randomly.

The interlayer film for laminated glass of the present invention may have a layer structure other than that shown in Fig 1, that is, a structure having a functional film 15 and a first polymer layer 11 that is provided on one front surface of the functional film 15 and constitutes the outermost layer.

For example, as shown in Fig 4, the interlayer film 10 for laminated glass may have a second polymer layer 12 as the outermost layer on the side opposite to the first polymer layer 11. In this way, when the functional film 15 is provided with a polymer layer on both sides, it is easier to maintain the shape and the optical properties of the functional film. In this case, an outer surface S2 of the second polymer layer preferably has a surface roughness (Rzjis94) of 1 µm or more and 100 µm or less. This further enhances degassing properties during production of the laminated glass.

The surface roughness of the outer surface of the second polymer layer is preferably 5 µm or more, more preferably 10 µm or more, further preferably 15 µm or more, further preferably 20 µm or more, further preferably 25 µm or more, and further preferably 40 µm or more. Further, the surface roughness of the outer surface of the second polymer layer is preferably 90 µm or less, more preferably 80 µm or less, further preferably 70 µm or less, and further preferably 60 µm or less.

The shape of the outer surface of the second polymer layer is not particularly limited, and may be a regular shape or a random shape.

The surface roughness (Rzjis94) of the outer surface of the first polymer layer and of the outer surface of the second polymer layer may be the same or different, but is preferably different. The difference in surface roughness (Rzjis94) of the outer surface of the first polymer layer and the outer surface of the second polymer layer is preferably 1 µm or more, more preferably 3 µm or more, further preferably 5 µm or more, further preferably 10 µm or more, and further preferably 20 µm or more, and is preferably 50 µm or less, and more preferably 40 µm or less.

In this way, by providing a predetermined difference in the surface roughness (Rzjis94) of the outer surface of the first polymer layer and the outer surface of the second polymer layer, for example, when producing the laminated glass, one front surface of the interlayer film for laminated glass can be made to have a surface roughness suitable for degassing, and the other front surface can be positioned while sliding over the front surface of the glass, and thus it is possible to provide excellent degassing properties while enhancing workability. In addition, in a case where the thickness of either the first polymer layer or the second polymer layer is thin, by reducing the level of surface roughness of the thinner polymer layer when imparting surface roughness so that there is a difference in surface roughness between the two front surfaces, it is possible to prevent unevenness from being transferred onto the front surface of the functional film, thereby maintaining the optical quality of the functional film.

### <Layer structure>

The interlayer film for laminated glass of the present invention may have a polymer layer on one side of the functional film as shown in Fig. 1, or have a polymer layer on both sides of the functional film as shown in Fig. 4, or may even have a structure other than the structures shown in Fig. 1 and Fig. 4, and may have three or more polymer layers.

For example, as shown in Fig. 5, the interlayer film 10 for laminated glass may have a first polymer layer 11, a functional film 15, an internal polymer layer 13, a functional film 16, and a second polymer layer 12 laminated in that order. In this case, the composition of the plurality of polymer layers may be the same or different, and the composition of the plurality of functional films may be the same or different. In this way, by providing three or more polymer layers, two or more functional films can be appropriately arranged and fixed, and various optical properties can be imparted to the interlayer film for laminated glass.

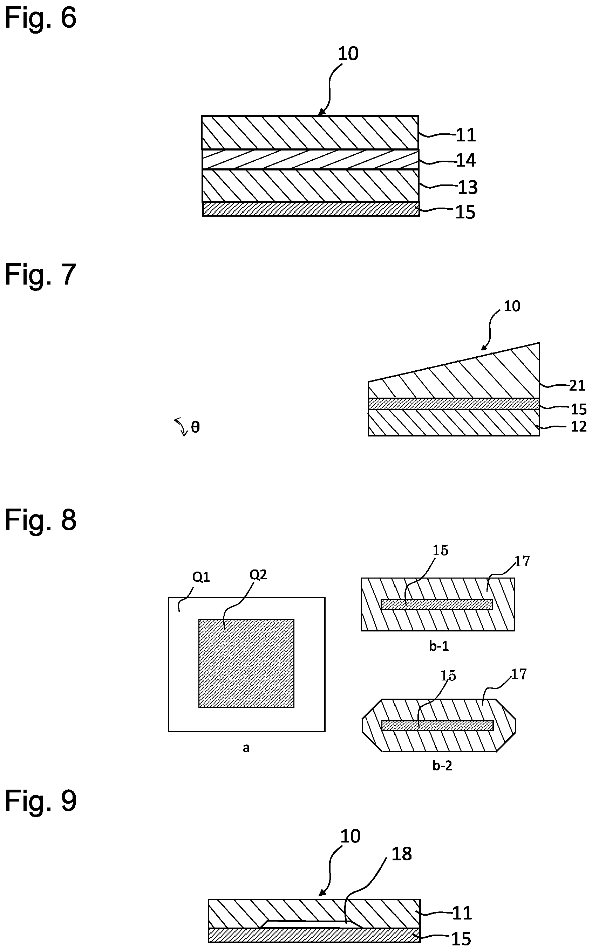

Further, the structure having three or more polymer layers is not limited to the mode shown in Fig. 5. For example, as shown in Fig. 6, the interlayer film 10 for laminated glass may have a first polymer layer, an internal polymer layer 14, an internal polymer layer 13, and a functional film 15 laminated in that order.

Among the polymer layers included in the interlayer film for laminated glass, at least one of the polymer layers may have a different thickness at one end from the thickness at the other end. For example, as shown in Fig. 7, the interlayer film 10 for laminated glass may include a wedge-shaped polymer layer 21 having a different thickness at one end from the thickness at the other end.

When such an interlayer film for laminated glass that includes a polymer layer having a different thickness at one end from the thickness at the other end is used for, for example, a HUD (head-up display), double images tend to be suppressed.

From the viewpoint of suppressing double images, the wedge angle θ of the interlayer film for laminated glass that includes a wedge-shaped polymer layer having a different thickness at one end from the thickness at the other end is preferably 0.10 mrad or more, more preferably 0.15 mrad or more, further preferably 0.20 mrad or more, and further preferably 0.25 mrad or more, and is preferably 2.0 mrad or less, and more preferably 1.5 mrad or less.

The wedge angle θ of the laminated glass is the interior angle at the intersection of the straight line connecting the maximum thickness portion and the minimum thickness portion in the laminated glass on a first front surface (one front surface) of the laminated glass and the straight line connecting the maximum thickness portion and the minimum thickness portion in the laminated glass on a second front surface (other front surface) of the laminated glass.

In the interlayer film for laminated glass of the present invention, as shown in Fig. 1 and Figs. 4 to 7, when viewed from the thickness direction, the proportion of the area of the functional film to the area of the interlayer film for laminated glass may be 100%, or the proportion of the area of the functional film may be less than 100%.

For example, Fig. 8 shows an example where the proportion of the area of the functional film to the area of the interlayer film for laminated glass is less than 100% when viewed from the thickness direction. The left diagram a in Fig. 8 shows, when the interlayer film for laminated glass is viewed from above, an area Q1 of the region occupied by the interlayer film for laminated glass (this can also be referred to as the area Q1 of the region occupied by the polymer layer), and an area Q2 of the region occupied by the functional film, with the area Q1 being larger than the area Q2. When the left diagram a of Fig. 8 viewed as a cross-section, such a cross-sectional view may be, for example, the right diagrams b-1 and b-2 of Fig. 8. The interlayer film for laminated glass shown in b-1 of Fig. 8 has a functional film 15 embedded inside a polymer layer 17, and the polymer layer 17 has a frame-like cross section. In addition, b-2 of Fig. 8 shows an interlayer film for laminated glass in which both ends of the interlayer film for laminated glass shown in b-1 are thinner than the other sections.

As used herein, "viewed from the thickness direction" means when viewed the surface direction from above of the interlayer film for laminated glass. The area of the interlayer film for laminated glass when viewed from the thickness direction corresponds to the projected area of the interlayer film for laminated glass on the upper part of the interlayer film for laminated glass in the surface direction. Further, the area of the functional film when viewed from the thickness direction corresponds to the projected area of the functional film on the upper part of the interlayer film for laminated glass in the surface direction.

The proportion of the area of the functional film to the area of the interlayer film for laminated glass when viewed from the thickness direction is, from the viewpoint of enhancing the uniformity of optical properties in the surface direction and suppressing appearance defects, preferably 50% or more, more preferably 80% or more, further preferably 90% or more, and further preferably 100%.

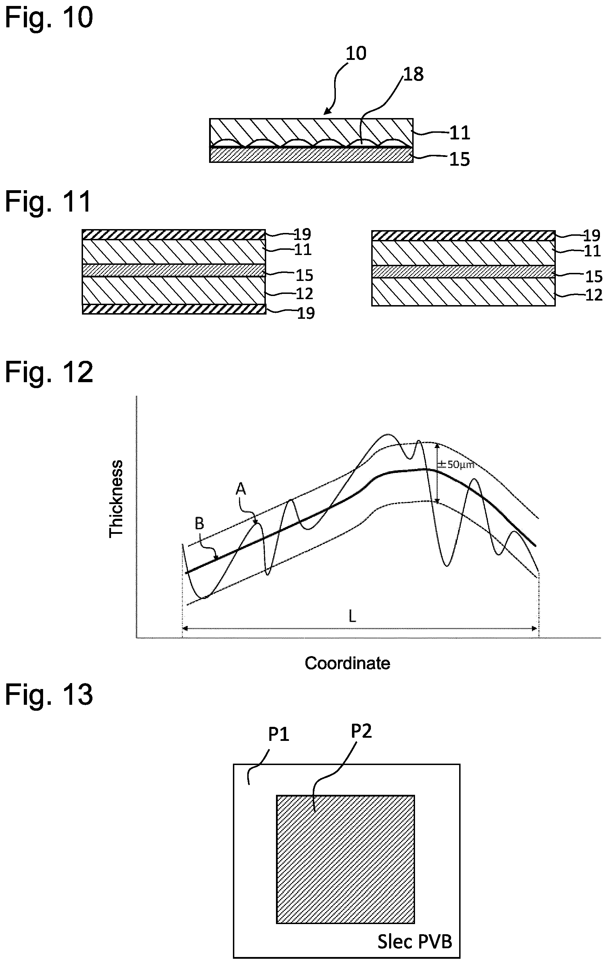

The interlayer film for laminated glass of the present invention may include an air layer between the functional film and the polymer layer. For example, as shown in Figs. 9 and 10, an air layer 18 may be formed between the functional film 15 and the first polymer layer 11. Although not shown, an air layer may be formed between the second polymer layer and the functional film. By forming an air layer, even if a part of the functional film and polymer layer peel off during handling, a degassing path can be secured when bonding onto glass, making bonding easier.

The air layer may be formed by adjusting the conditions for laminating the polymer layer and the functional film, or formed by embossing one side of the polymer layer and laminating the functional film on the one side of the embossed polymer layer. For example, during lamination, an air layer can be formed by adjusting the pressing time, pressing temperature, and pressing pressure when pressing with a plate. In the case of forming an air layer, it is preferable to set a shorter pressing time, a lower pressing temperature, and a lower pressing pressure than when an air layer is not formed.

Examples of methods other than lamination include a method of preparing an embossed polymer layer and a functional film, stacking those layers, placing the stack in a rubber pack, and pressure bonding. It is advisable to adjust the pressing time, pressing temperature, and pressing pressure during the pressure bonding. That is, in the case of forming an air layer, it is preferable to set a shorter pressing time, a lower pressing temperature, and a smaller pressing pressure during the pressure bonding than when an air layer is not formed.

The presence or absence of an air layer can be confirmed by observing the cross section of the interlayer film for laminated glass using a scanning electron microscope.

Further, at least one front surface of the interlayer film for laminated glass may be protected by a protective release film. For example, as shown in the left diagram of Fig. 11, both sides of the interlayer film for laminated glass described with reference to Fig. 4 may be protected by a protective release film 19, or as shown in the right diagram of Fig. 11, one side may be protected by a protective release film 19.

In this way, by using a protective release film, the front surface of the interlayer film for laminated glass can be appropriately protected.

The protective release film has a surface roughness (Rzjis94) of preferably 1 µm or more and 100 µm or less. More specifically, the surface roughness (Rzjis94) of the protective release film on the side that is in contact with the polymer layer is preferably 1 µm or more and 100 µm or less. When such a protective release film is used, the predetermined surface roughness (Rzjis94) defined in the present invention can be formed on the outer surface of the polymer layer.

The surface roughness (Rzjis94) of the protective release film is preferably 5 µm or more, more preferably 10 µm or more, further preferably 15 µm or more, further preferably 20 µm or more, further preferably 25 µm or more, and further preferably 40 µm or more. Further, the surface roughness (Rzjis94) of the protective release film is preferably 90 µm or less, more preferably 80 µm or less, further preferably 70 µm or less, and further preferably 60 µm or less.

The type of the protective release film is not particularly limited, and examples include a protective release film having a polyester substrate, such as a PET (polyethylene terephthalate) film, or a protective release film having a polyolefin substrate, such as a PE (polyethylene) or PP (polypropylene) film. Further, the film may be a release film whose front surface has been subjected to a release treatment using a release agent or the like.

### <Polymer layer thickness>

The thickness of the polymer layer included in the interlayer film for laminated glass is not particularly limited, but is, for example, 2 µm or more and 2000 µm or less, preferably 10 µm or more and 1000 µm or less, more preferably 30 µm or more and 900 µm or less, and further preferably 100 µm or more and 800 µm or less. When the interlayer film for laminated glass includes a plurality of polymer layers, the thickness of each polymer layer may be the same or different, but it is preferred that the thickness of at least one polymer layer is 2 µm or more, and of the polymer layers, it is preferred that the thickness of the polymer layer constituting the outermost layer is 2 µm or more. By setting the thickness of the polymer layer constituting the outermost layer to a certain level or more, when imparting surface roughness to the polymer layer, it is possible to suppress unevenness from being transferred onto the functional film, and it is easier to maintain the functionality of the functional film.

Further, in the polymer layer constituting the outermost layer, the thickness of a thinner polymer layer may be, for example, 800 µm or less, 600 µm or less, 400 µm or less, 300 µm or less, 100 µm or less, or 50 µm or less. In this way, even when the polymer layer is thin, surface roughness can be appropriately imparted onto the front surface of the polymer layer, degassing properties during production of the laminated glass are good, and laminated glass in which optical distortion is suppressed can be obtained.

When the interlayer film for laminated glass has a first polymer layer and a second polymer layer, the difference in thickness between the first polymer layer and the second polymer layer is preferably 1 µm or more and 1000 µm or less, more preferably 10 µm or more and 500 µm or less, and further preferably 20 µm or more and 300 µm or less. In this way, when the thickness of the first polymer layer and the thickness of the second polymer layer are different, the placement of the functional film is shifted from the center to one of the front surfaces in the thickness direction of the interlayer film for laminated glass. In such a case, depending on the type of functional film, it is possible to arrange the functional film so that the function of the film can be easily exhibited.

If there is a difference in thickness between the first polymer layer and the second polymer layer, one of the polymer layers will be thinner, but even in this case, deformation of the functional film can be suppressed by imparting surface roughness to the polymer layer using the method described later.

In interlayer film for laminated glass of the present invention, it is preferred that the interlayer film, when a thickness distribution curve A obtained by measuring the thickness at equal intervals in a region of 80% of the region including the functional film is compared with a thickness distribution curve B, which is a smoothed thickness distribution curve obtained by subjecting the thickness distribution curve A to moving average processing, has a region, where an absolute value of a displacement in the thickness of the thickness distribution curve A with respect to the thickness of the thickness distribution curve B is 50 µm or less, of 70% or more.

When the region where the absolute value of the displacement in thickness is 50 µm or less is 70% or more, the stability of the optical properties of the interlayer film for laminated glass is enhanced. For example, when a P-polarized light reflective film, which is described later, is used as the functional film, it is possible to reduce in-plane variation in the incident angle and the reflection angle, thereby suppressing image distortion.

In the interlayer film for laminated glass, the region where the absolute value of the displacement in thickness is 50 µm or less is preferably 80% or more, more preferably 90% or more, further preferably 95% or more, and further preferably 100%.

The proportion in which the absolute value of the displacement in thickness is 50 µm or less can be adjusted based on the types of polymer layer and functional film used, and the production conditions when laminating the polymer layer and functional film. For example, by reducing the temperature distribution and unevenness in stress during lamination, it is possible to increase the proportion in which the absolute value of the displacement in thickness is 50 µm or less.

The method for measuring the region where the absolute value of the displacement in thickness is 50 µm or less will be described below with reference to Fig. 12. Specifically, the measurement can be carried out by the following methods (1) to (3).
(1) A region L of 80% of the region including the functional film in the interlayer film for laminated glass is identified. The region L determined by identifying the region that includes the functional film, and when the interlayer film for laminated glass is viewed from the thickness direction, the region takes the region of 80% of the length of the functional film, centered on the center of the functional film, in a cross section that passes through the center of the functional film in the MD direction (Machine direction) or TD direction (Transverse direction). That is, when the length of the functional film in the cross section in the MD direction or TD direction is 1.0 X, the region L is in the range of 0.1 X to 0.9 X.
(2) In the region L, the thickness of the interlayer film for laminated glass is measured at 1 mm intervals to obtain a thickness distribution curve A. The thickness is measured using a contact thickness measuring device (manufactured by Yamabun Electronics Co., Ltd., trade name: TOF-4R, or equivalent product).
(3) The thickness distribution curve A is subjected to moving average processing to obtain a smoothed thickness distribution curve B. Specifically, in the thickness distribution curve A, for the region between the 41st point from one end to the other end in the region L and the 41st point from the other end to the one end, 81 points each centered at around each point are selected and averaged to obtain the thickness distribution curve B.
(4) In the region L, the proportion of the region in which the displacement in thickness in the thickness distribution curve A with respect to the thickness in the thickness distribution curve B is within 50 µm is calculated.

The proportion of the region in which the absolute value of the displacement in thickness is 50 µm or less may satisfy a predetermined value in a cross section of either the MD or TD described in (1) above.

### <Printing>

Product information may be printed on the interlayer film for laminated glass. Printing product information makes it easier to select an appropriate interlayer film when producing the laminated glass and enhances production efficiency.

For example, as shown in Fig. 13, it is preferred to print the product information onto an edge portion of the polymer layer of the front surface where a functional film is not present below when viewed from above. By printing on the edge portion, the printed portion can be removed by trimming during the production of the laminated glass. It is noted that the mode shown in Fig. 13 is just an example, and there are no particular restrictions on the location of the printing onto the interlayer film for laminated glass.

The portion that is printed as the product information is preferably displayed as lines, characters, symbols, or graphics. Examples of the product information include the manufacturer's name, the product name, a trademark, a lot number, and the like.

The color of the printed portion is not particularly limited, and examples include white, black, red, blue, yellow, green, and the like. The printed portion may be semitransparent. Semitransparent means that the printed portion is not completely transparent and can be seen through.

The method for forming the printed portion as the product information is not particularly limited, but examples include laser printing, inkjet printing, magic marker printing, labeler printing, and the like. The printed portion may be formed before or after imparting predetermined surface roughness to the polymer layer. Further, the printed portion may or may not be visible when formed as laminated glass.

The printed portion as the product information may or may not be visible under visible light.

Further, the printed portion may be a portion that can be checked by irradiating light of a specific wavelength other than visible light. By using such a printed portion, it is possible to maintain a good appearance in which the printed portion is normally inconspicuous but can be checked when irradiated with light of a specific wavelength as needed. For example, it is also preferred to form the printed portion by printing using ink that is visible when irradiated with black light.

### <Composition of polymer layer>

Next, the composition of the polymer layer of the interlayer film for laminated glass of the present invention is now described.

### <Thermoplastic resin>

The polymer layer in the interlayer film for laminated glass of the present invention contains a thermoplastic resin. By containing a thermoplastic resin, it is easier to function as an adhesive layer, resulting in good adhesion with other layers such as glass sheet.

The thermoplastic resin is not particularly limited, and examples thereof include a polyvinyl acetal resin, an ethylene-vinyl acetate copolymer resin, an ionomer resin, a polyurethane resin, a thermoplastic elastomer, and the like.

Since the first polymer layer and the second polymer layer constitute the outermost layers, it is preferred that the first polymer layer and the second polymer layer have high adhesion to glass. From this viewpoint, it is preferred that one or both of the first polymer layer and the second polymer layer contains at least one thermoplastic resin selected from the group consisting of a polyvinyl acetal resin and an ethylene-vinyl acetate copolymer resin.

In particular, a polyvinyl acetal resin is more preferred since it exhibits excellent adhesion to glass when used in combination with a plasticizer.

### (Polyvinyl acetal resin)

The polyvinyl acetal resin is obtained by acetalizing a polyvinyl alcohol with an aldehyde. Further, the polyvinyl alcohol can be obtained, for example, by saponifying a polyvinyl ester such as a polyvinyl acetate. One type of polyvinyl acetal resin may be used alone, or two or more types may be used in combination.

The aldehyde used for acetalization is not particularly limited, but an aldehyde having from 1 to 10 carbon atoms is preferably used, an aldehyde having from 2 to 6 carbon atoms is more preferable, and an aldehyde having 4 carbon atoms is further preferable.

The aldehyde having from 1 to 10 carbon atoms is not particularly limited, and examples include n-butyraldehyde, isobutyraldehyde, n-valeraldehyde, 2-ethylbutyraldehyde, n-hexylaldehyde, n-octylaldehyde, n-nonylaldehyde, n-decylaldehyde, formaldehyde, acetaldehyde, benzaldehyde, and the like. Among these, n-butyraldehyde, n-hexylaldehyde, and n-valeraldehyde are preferable, and n-butyraldehyde is more preferable. These aldehydes may be used alone or in combination of two or more.

Further, as the polyvinyl alcohol, a polyvinyl alcohol having a degree of saponification of 80 to 99.8 mol% is generally used. The average degree of polymerization of polyvinyl alcohol is preferably 500 or more, and preferably 4000 or less, in order to adjust the average degree of polymerization of the polyvinyl acetal resin to be within a desired range. The average degree of polymerization of the polyvinyl alcohol is more preferably 1000 or more, and more preferably 3600 or less. The average degree of polymerization of the polyvinyl alcohol is determined by a method in accordance with JIS K6726 "Polyvinyl alcohol test method".

The number of carbon atoms of the acetal group contained in the polyvinyl acetal resin is not particularly limited, but is preferably from 1 to 10, more preferably from 2 to 6, and further preferably 4. Specifically, a butyral group is particularly preferred as the acetal group, and therefore, a polyvinyl butyral resin is preferable as the polyvinyl acetal resin.

The acetalization degree of the polyvinyl acetal resin is preferably 40 mol% or more, and preferably 85 mol% or less. Further, the acetalization degree is more preferably 60 mol% or more, and more preferably 75 mol% or less. In addition, "acetalization degree" refers to the degree of butyralization when the acetal group is a butyral group and the polyvinyl acetal resin is a polyvinyl butyral resin.

The amount of hydroxyl groups in the polyvinyl acetal resin is preferably 15 mol% or more, and preferably 35 mol% or less. When the amount of hydroxyl groups is 15 mol% or more, adhesion to a glass sheet and the like tends to be better, and the penetration resistance of the laminated glass tends to be better. Further, when the amount of hydroxyl groups is 35 mol% or less, for example, when used in laminated glass, the laminated glass is prevented from becoming too hard. The amount of hydroxyl groups in the polyvinyl acetal resin is more preferably 20 mol% or more, and more preferably 33 mol% or less.

The degree of acetylation (acetyl group content) of the polyvinyl acetal resin is preferably 0.1 mol% or more, and is preferably 20 mol% or less. When the degree of acetylation is equal to or more than the lower limit, compatibility with the plasticizer and the like tends to be better. When the degree of acetylation is equal to or less than the upper limit, the moisture resistance of a light emitting layer is increased. From these viewpoints, the degree of acetylation is more preferably 0.3 mol% or more, and further preferably 0.5 mol% or more, and is more preferably 10 mol% or less, and further preferably 5 mol% or less.

The amount of hydroxyl groups, the acetalization degree (the butyralization degree), and the degree of acetylation can be calculated from results measured by a method in accordance with JIS K6728 "Polyvinyl butyral test method".

The average degree of polymerization of the polyvinyl acetal resin is preferably 500 or more, and preferably 4000 or less. By setting the average degree of polymerization to 500 or more, the penetration resistance of the laminated glass is good. Further, by setting the average degree of polymerization to 4000 or less, the laminated glass can be easily molded. The degree of polymerization is more preferably 1000 or more, and more preferably 3600 or less. The average degree of polymerization of the polyvinyl acetal resin is the same as the average degree of polymerization of polyvinyl alcohol used as a raw material, and can be determined from the average degree of polymerization of the polyvinyl alcohol.

### (Ethylene-vinyl acetate copolymer resin)

The ethylene-vinyl acetate copolymer resin may be a non-crosslinked ethylene-vinyl acetate copolymer resin or a high-temperature crosslinkable ethylene-vinyl acetate copolymer resin. Examples of ethylene-vinyl acetate copolymer resins that can be used include ethylene-vinyl acetate modified resins such as a saponified ethylene-vinyl acetate copolymer, an ethylene-vinyl acetate hydrolysate, and the like.

The ethylene-vinyl acetate copolymer resin preferably has a vinyl acetate content as measured in accordance with JIS K 6730 "Ethylene-vinyl acetate resin test method" or JIS K 6924-2:1997 of 10% by mass or more and 50% by mass or less, and more preferably 20% by mass or more and 40% by mass or less. By setting the vinyl acetate content to be equal to or more than these lower limits, adhesion to the glass is increased, and when used for laminated glass, the penetration resistance of the laminated glass tends to enhance. Moreover, by setting the vinyl acetate content to be equal to or less than these upper limits, the breaking strength of the interlayer film for laminated glass is increased, and the impact resistance of the laminated glass is good.

### (Ionomer resin)

The ionomer resin is not particularly limited, and various ionomer resins can be used. Specific examples include an ethylene ionomer, a styrene ionomer, a perfluorocarbon ionomer, a telechelic ionomer, a polyurethane ionomer, and the like. Among these, an ethylene ionomer is preferable because the mechanical strength, durability, transparency, and the like of the laminated glass, which will be described later, are good, and because adhesion to glass is excellent.

It is preferable to use an ionomer of an ethylene/unsaturated carboxylic acid copolymer as the ethylene ionomer because transparency and toughness are excellent. The ethylene/unsaturated carboxylic acid copolymer is a copolymer that has at least a structural unit derived from ethylene and a structural unit derived from an unsaturated carboxylic acid, and may also have structural units derived from other monomers.

Examples of the unsaturated carboxylic acid include acrylic acid, methacrylic acid, maleic acid, and the like. Acrylic acid and methacrylic acid are preferable, and methacrylic acid is particularly preferable. Examples of other monomers include acrylic esters, methacrylic esters, 1-butene, and the like.

The ethylene/unsaturated carboxylic acid copolymer preferably has 75 to 99 mol% of structural units derived from ethylene and preferably 1 to 25 mol% of structural units derived from the unsaturated carboxylic acid, relative to a total of the structural units of the copolymer of 100 mol%.

The ionomer of the ethylene/unsaturated carboxylic acid copolymer is an ionomer resin obtained by neutralizing or crosslinking at least a part of the carboxyl groups of the ethylene/unsaturated carboxylic acid copolymer with a metal ion. The degree of neutralization of the carboxyl groups is usually 1 to 90%, and preferably 5 to 85%.

Examples of the ion source in the ionomer resin include an alkali metal such as lithium, sodium, potassium, rubidium, and cesium, and a polyvalent metal such as magnesium, calcium, and zinc. Sodium and zinc are preferable.

The method for producing the ionomer resin is not particularly limited, and the ionomer resin can be produced by a conventionally known production method. For example, in the case of using an ionomer of an ethylene/unsaturated carboxylic acid copolymer as the ionomer resin, for example, ethylene and an unsaturated carboxylic acid are subjected to radical copolymerization at high temperature and pressure to produce an ethylene/unsaturated carboxylic acid copolymer. Then, an ionomer of the ethylene/unsaturated carboxylic acid copolymer can be produced by reacting the ethylene/unsaturated carboxylic acid copolymer with a metal compound containing the above-described ion source.

### (Polyurethane resin)

Examples of the polyurethane resin include a polyurethane obtained by reacting an isocyanate compound with a diol compound, a polyurethane obtained by reacting an isocyanate compound with a diol compound, and a chain extender such as a polyamine, and the like. Moreover, the polyurethane resin may contain a sulfur atom. In that case, a part or all of the diols may be selected from polythiols and sulfur-containing polyols. The polyurethane resin can enhance adhesion to organic glass. Therefore, it is preferable to use a polyurethane resin when the glass plate is an organic glass.

### (Thermoplastic elastomer)

Examples of the thermoplastic elastomer include a styrene thermoplastic elastomer and an aliphatic polyolefin. The styrene thermoplastic elastomer is not particularly limited, and a known styrene thermoplastic elastomer can be used. The styrene thermoplastic elastomer generally has a styrene monomer polymer block that serves as a hard segment, and a conjugated diene compound polymer block or a hydrogenated block thereof that serves as a soft segment. Specific examples of the styrene thermoplastic elastomer include a styreneisoprene diblock copolymer, a styrene-butadiene diblock copolymer, a styrene-isoprene-styrene triblock copolymer, a styrene-butadiene/isoprene-styrene triblock copolymer, a styrene-butadiene-styrene triblock copolymer, and hydrogenated products thereof.

The aliphatic polyolefin may be a saturated aliphatic polyolefin or an unsaturated aliphatic polyolefin. The aliphatic polyolefin may be a polyolefin containing a chain olefin as a monomer, or may be a polyolefin containing a cyclic olefin as a monomer. From the viewpoint of effectively increasing the storage stability of a light-emitting layer, the aliphatic polyolefin is preferably a saturated aliphatic polyolefin.

Examples of the material of the aliphatic polyolefin include ethylene, propylene, 1-butene, trans-2-butene, cis-2-butene, 1-pentene, trans-2-pentene, cis-2-pentene, 1-hexene, trans -2-hexene, cis-2-hexene, trans-3-hexene, cis-3-hexene, 1-heptene, trans-2-heptene, cis-2-heptene, trans-3-heptene, cis-3-heptene, 1-octene, trans-2-octene, cis-2-octene, trans-3-octene, cis-3-octene, trans-4-octene, cis-4-octene, 1-nonene, trans-2-nonene, cis-2-nonene, trans-3-nonene, cis-3-nonene, trans-4- nonene, cis-4-nonene, 1-decene, trans-2-decene, cis-2-decene, trans-3-decene, cis-3-decene, trans-4-decene, cis-4-decene, trans-5-decene, cis-5-decene, 4-methyl-1-pentene, vinylcyclohexane, and the like.

### <Plasticizer>

The polymer layer in the present invention may further contain a plasticizer. Containing a plasticizer makes the polymer layer flexible, and as a result, the flexibility of the interlayer film for laminated glass or the laminated glass can be enhanced, and the penetration resistance of the laminated glass can also be enhanced. In addition, it is also possible to exhibit high adhesion with a glass sheet. The plasticizer is particularly effective when included in a case where a polyvinyl acetal resin is used as the thermoplastic resin.

Examples of the plasticizer include organic ester plasticizers such as monobasic organic acid esters and polybasic organic acid esters, phosphorus plasticizers such as organic phosphate ester plasticizers and organic phosphite ester plasticizers, and the like. Among these, organic ester plasticizers are preferable.

Examples of the organic ester plasticizers include triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, tetraethylene glycol di-2-ethylhexanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, 1,2-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicapreate, triethylene glycol di-n-heptanoate, tetraethylene glycol di-n-heptanoate, triethylene glycol di-2-ethylbutyrate, dihexyl adipate, dioctyl adipate, hexylcyclohexyl adipate, diisononyl adipate, heptylnonyl adipate, dibutyl sebacate, an oil-modified sebacic acid alkyd, a mixture of a phosphoric acid ester and an adipate ester, a mixed adipate ester, and the like. Examples of the mixed adipate ester include an adipate ester produced from two or more alcohols selected from alkyl alcohols having from 4 to 9 carbon atoms and cyclic alcohols having from 4 to 9 carbon atoms.

Among the above plasticizers, triethylene glycol-di-2-ethylhexanoate (3GO) is particularly suitably used.

The content of the plasticizer in the polymer layer is not particularly limited, but is, with respect to 100 parts by mass of the thermoplastic resin, preferably 10 parts by mass or more and 100 parts by mass or less. When the content of the plasticizer is equal to or more than 10 parts by mass, the laminated glass is suitably flexible and has good penetration resistance, adhesion, and the like. In addition, when the content of the plasticizer is equal to or less than 100 parts by mass, separation of the plasticizer from the interlayer film is prevented. The content of the plasticizer is more preferably 20 parts by mass or more, further preferably 30 parts by mass or more, and further preferably 35 parts by mass or more, and is more preferably 70 parts by mass or less, and further preferably 60 parts by mass or less.

The polymer layer is mainly composed of a thermoplastic resin, or a thermoplastic resin and a plasticizer, and the total amount of the thermoplastic resin and the plasticizer in the polymer layer is, based on the total amount of the polymer layer, usually 70% by mass or more, preferably 80% by mass or more, and more preferably 90% by mass or more, and is less than 100% by mass.

### <Functional fine particles>

The polymer layer of the present invention may contain functional fine particles such of a heat shielding agent, a coloring agent, and the like.

### (Heat shielding agent)

Examples of the heat shielding agent include heat shielding particles. The heat shielding particles are composed of an inorganic material, and specific examples thereof include metal oxide particles and particles other than metal oxide particles, such as lanthanum hexaboride (LaB6) particles. Examples of metal oxide particles include tin oxide particles such as aluminum-doped tin oxide particles, indium-doped tin oxide particles, and antimony-doped tin oxide particles (ATO particles), zinc oxide particles such as gallium-doped zinc oxide particles (GZO particles), indium-doped zinc oxide particles (IZO particles), aluminum-doped zinc oxide particles (AZO particles), tin-doped zinc oxide particles, and silicon-doped zinc oxide particles, titanium oxide particles such as niobium-doped titanium oxide particles, indium oxide particles such as tin-doped indium oxide particles (ITO particles), and tungsten oxide particles such as sodium-doped tungsten oxide particles, cesium-doped tungsten oxide particles (CWO particles), thallium-doped tungsten oxide particles, and rubidium-doped tungsten oxide particles. Further, heat shielding particles other than these may be used. One type of heat shielding material may be used alone, or two or more types may be used in combination.

Among these, metal oxide particles are preferable because they have a high heat ray shielding function. It is more preferable to use at least one selected from ATO particles, GZO particles, ITO particles, and CWO particles, and further preferable to use ITO particles or CWO particles.

A preferable lower limit of the average particle diameter of the heat shielding particles is 10 nm, and a more preferable lower limit is 20 nm. A preferable upper limit is 100 nm, a more preferable upper limit is 80 nm, and an even more preferable upper limit is 50 nm. As used herein, "average particle diameter" indicates a volume average particle diameter. The average particle diameter can be measured using a particle size distribution measuring instrument ("UPA-EX150" manufactured by Nikkiso Co., Ltd.).

Examples of the heat shielding agent include a heat shielding compound. The heat shielding compound is an organic material or an organic-inorganic composite material that can absorb infrared rays, and is also called a "near-infrared absorber". The near-infrared absorber has an absorption maximum in the near-infrared region, and exhibits a maximum absorption even among the absorption maximums present in the wavelength region of 380 nm to 2500 nm. Specifically, the near-infrared absorber has a maximum absorption in a wavelength region of 720 nm or more, and preferably 750 nm or more and 2000 nm or less.

Examples of the heat shielding compound include one or more compounds (hereinafter, also referred to as "compound X") selected from a phthalocyanine compound, a naphthalocyanine compound, and an anthracyanine compound.

The phthalocyanine compound is a phthalocyanine or a phthalocyanine derivative having a phthalocyanine skeleton, and preferably contains a metal atom. The naphthalocyanine compound is naphthalocyanine or a naphthalocyanine derivative having a naphthalocyanine skeleton, and preferably contains a metal atom. The anthracyanine compound is an anthracyanine or an anthracyanine derivative having an anthracyanine skeleton, and preferably contains a metal atom.

In these compounds X, the metal atom is the central metal of the phthalocyanine skeleton, naphthalocyanine skeleton, and anthracyanine skeleton.

The heat shielding compound is preferably one or more selected from the phthalocyanine compound and the naphthalocyanine compound, and the phthalocyanine compound is more preferable.

Further, as the metal atom, a vanadium atom is preferable, and a phthalocyanine compound containing a vanadium atom is more preferable. The vanadium atom is usually present in a state in which an oxygen atom is bonded to the vanadium atom (V=O).

One type of the above-described heat shielding compounds may be used alone, or two or more types may be used in combination.

The content of the heat shielding agent in the polymer layer is not particularly limited, but is, for example, 0.05% by mass or more and 1.5% by mass or less, preferably 0.10% by mass or more and 1.2% by mass or less, and more preferably 0.15% by mass or more and 0.9% by mass or less.

### (Coloring agent)

The polymer layer of the present invention may contain a coloring agent. By using a coloring agent, it is possible to color the laminated glass, increase the light-shielding properties of the laminated glass, and impart anti-glare properties.

The coloring agent used is not particularly limited, and colorants conventionally mixed in interlayer films for laminated glass can be used. Colorants of blue, yellow, red, green, purple, black, white, and the like can be used. The colorant may be a pigment or a dye.

Examples of the pigment include copper phthalocyanine pigments such as pigment blue, phthalocyanine pigments such as cobalt phthalocyanine pigment, anthraquinone pigments, perylene pigments, diketopyrrolopyrrole pigments, quinacridone pigments, perinone pigments, thioindigo pigments, isoindoline pigments, isoindolinone pigments, quinophthalone pigments, threne pigments, titanium oxide pigments, carbon blacks such as Pigment Black 7, and carbon materials such as graphene and carbon nanotubes.

Examples of dyes include azo dyes, cyanine dyes, triphenylmethane dyes, phthalocyanine dyes, anthraquinone dyes, naphthoquinone dyes, quinone imine dyes, methine dyes, azomethine dyes, squarylium dyes, acridine dyes, styryl dyes, coumarin dyes, quinoline dyes, nitro dyes, and the like. The dye may be a dispersed dye.

Among these, as pigments, phthalocyanine pigments, anthraquinone pigments, perylene pigments, and carbon black are preferable because they have high affinity with thermoplastic resins and are less susceptible to bleeding out. Further, as the dyes, anthraquinone dyes are preferable.

One type of coloring agent may be used alone, or two or more types may be used in combination.

The content of the coloring agent in the polymer layer is preferably 0.01% by mass or more and 3.0% by mass or less, more preferably 0.02% by mass or more and 0.5% by mass or less, and further preferably 0.04% by mass or more and 0.3% by mass or less.

The polymer layer in the present invention may contain additives other than those described above, and may contain additives such as an ultraviolet absorber, an antioxidant, a light stabilizer, an adhesive force regulator, an optical brightener, and a crystal nucleating agent.

When the interlayer film for laminated glass of the present invention includes a plurality of polymer layers, the composition of each polymer layer may be the same or different.

The interlayer film for laminated glass preferably has a polymer layer with a glass transition temperature (Tg) of less than 15°C. A laminated glass having an interlayer film for laminated glass with such a polymer layer has enhanced sound insulation properties. The glass transition temperature (Tg) is preferably 10°C or less, more preferably 5°C or less, and further preferably 0°C or less.

The glass transition temperature is obtained by dynamic viscoelasticity measurement. Specifically, when there are a plurality of polymer layers, each layer is peeled off and press-molded using a press-molding machine to obtain a test piece of the layer to be measured. The glass transition temperature of each test piece is then measured. Examples of the device used to measure the glass transition temperature include the "ARES-G2" manufactured by TA Instruments. The glass transition temperature measurement was carried out using parallel plates having a diameter of 8 mm as a jig, under conditions of lowering the temperature from 100°C to -10°C at a cooling rate of 3 °C/min, at a frequency of 1 Hz and a strain of 1%. In the obtained measurement results, the peak temperature of the loss tangent was defined as the glass transition temperature (°C).

### <Functional film>

The functional film of the present invention is not particularly limited, but is preferably a film that has the function of absorbing or reflecting specific light. Examples of the specific light include visible light, ultraviolet light, infrared light, and the like.

The functional film contains at least a resin, and more preferably contains a resin and a metal compound. Examples of the functional film include a form in which the metal compound is dispersed in the resin, a form in which a resin layer and a layer composed of the metal compound are laminated, and the like.

### (Resin)

Examples of the resin include, but are not particularly limited to, a thermoplastic resin, a thermosetting resin, an elastomer resin, and the like.

Examples of the thermoplastic resin include a polyolefin resin such as a polypropylene resin, a polyethylene resin, a poly(1-)butene resin, and a polypentene resin, a polyester resin such as a polyethylene terephthalate resin, a polystyrene resin, an acrylonitrile-butadiene-styrene (ABS) resin, a polyvinyl acetal resin, an ethylene vinyl acetate copolymer (EVA) resin, a polyvinyl alcohol resin, a polycarbonate resin, a polyphenylene ether resin, an acrylic resin, a polyamide resin, a polyvinyl chloride resin (PVC), a novolak resin, a polyurethane resin, and a synthetic resin of polyisobutylene and the like.

Examples of the thermosetting resin include an epoxy resin, a urethane resin, a phenol resin, a urea resin, a melamine resin, an unsaturated polyester resin, and a synthetic resin of a polyimide and the like.

Among these, a polyester resin is preferred, and a polyethylene terephthalate resin is more preferred. Thus, it is preferred that the functional film in the present invention contains a polyethylene terephthalate resin.

The content of the resin in the functional film is not particularly limited, but is, for example, 50% by mass or more, preferably 60% by mass or more, more preferably 70% by mass or more, further preferably 80% by mass or more, and further preferably 90% by mass or more, and is, for example, 100% by mass or less, and preferably 99.5% by mass or less.

### (Metal compound)

It is preferred that the functional film contains a metal compound. The metal compound is not particularly limited as long as it contains a metal atom, and examples thereof include a metal oxide, a metal nitride, and a metal hydroxide. The metal compound may be a metal.

Examples of the metal atom contained in the metal compound include tin, indium, aluminum, zinc, magnesium, zirconium, niobium, tantalum, tungsten, palladium, titanium, iron, cobalt, chromium, platinum, gold, silver, copper, nickel, and the like. One type of metal atom may be contained in the metal compound, or two or more types may be contained.

Among metal compounds, a metal oxide is preferred, and among metal oxides, for example, ITO (indium tin oxide), indium oxide, tin oxide, zinc oxide, magnesium oxide, titanium oxide, and the like are preferred.

The content of the metal compound in the functional film is not particularly limited, but is, for example, 0.0001% by mass or more, preferably 0.001% by mass or more, more preferably 0.005% by mass or more, further preferably 0.01% by mass or more, further preferably 0.05% by mass or more, further preferably 0.1% by mass or more, and further preferably 0.5% by mass or more, and is, for example, 50% by mass or less, preferably 20% by mass or less, preferably 10% by mass or less, further preferably 5% by mass or less, and further preferably 1% by mass or less.

### (Type)

The functional film is preferably a P-polarized light reflective film, a hologram film, a heat-ray reflective film, a light control film, or a solar film, and of those is more preferably a P-polarized light reflective film, a hologram film, a heat-ray reflective film, or a light control film.

When a plurality of functional films are used in the interlayer film for laminated glass, the plurality of functional films may be the same or different.

A P-polarized light reflective film is a film that has a function of reflecting P-polarized light. It is preferred to use an interlayer film for laminated glass having a P-polarized light reflective film for a vehicle HUD (head-up display) application. By arranging a film that reflects P-polarized light in laminated glass and making the HUD light source P-polarized light, the image has a P-polarized light polarization state, and so the visibility of the HUD image with polarized sunglasses is enhanced.

The P-polarized light reflective film is not particularly limited as long as it has the function of reflecting P-polarized light, but examples include a film formed by coating titania on a substrate (a resin film such as PET film).

Further, even when a P-polarized light reflective film is used as the functional film of the interlayer film for laminated glass of the present invention, since the shape of the P-polarized light reflective film when forming surface roughness is maintained, optical distortion can be suppressed, double images and the like tend to be suppressed, and thus the interlayer film for laminated glass is superior.

A hologram film generally has a function that is capable of changing the incident angle and the reflection angle.

The hologram film is produced by recording image information by, for example, exposing the film to interference light and polymerizing a photoreactive monomer thereon. For example, an optical functional layer composition containing a photoreactive monomer and a matrix polymer is applied on a substrate (e.g., a resin film) to form an optical functional layer. Then, a hologram film can be obtained by polymerizing the photoreactive monomer in the optical functional layer with interference light. In addition, the optical functional layer composition and the optical functional layer may optionally contain a photoinitiator, a pigment, and the like.

The photoreactive monomer has at least one ethylenically unsaturated double bond, and can be polymerized by exposure to interference light. It is preferred that the photoreactive monomer preferably has a relatively high refractive index. As the photoreactive monomer, it is preferred to use an acrylic monomer. The acrylic monomer is a monomer having either an acryloyl group or a methacryloyl group.

One type of photoreactive monomers may be used alone, or two types or more may be used in combination. The content of the photoreactive monomer in the optical functional layer is preferably in the range of 10 to 50% by mass, for example.

Examples of the matrix polymer include polyvinyl acetate (polyvinyl acetate), polyvinyl butyrate, polyvinyl formal, polyvinyl carbazole, polyacrylic acid, polymethacrylic acid, polymethyl acrylate, polymethyl methacrylate, polyethyl acrylate, polybutyl acrylate, polymethacrylonitrile, polyethyl methacrylate, polybutyl methacrylate, polyacrylonitrile, poly-1,2-dichloroethylene, an ethylene-vinyl acetate copolymer, a tetrafluoroethylene-vinyl acetate copolymer, syndiotactic polymethyl methacrylate, poly-α-vinyl naphthalate, polycarbonate, cellulose acetate, cellulose triacetate, cellulose acetate butyrate, polystyrene, poly-α-methylstyrene, poly-o-methylstyrene, poly-p-methylstyrene, poly-p-phenylstyrene, poly-2,5-dichlorostyrene, poly-p-chlorostyrene, polyarylate, polysulfone, polyethersulfone, a styrene-acrylonitrile copolymer, a styrene-divinylbenzene copolymer, a styrene -butadiene copolymer, a styrene-maleic anhydride copolymer, an ABS resin, polyethylene, polyvinyl chloride, polypropylene, polyethylene terephthalate, polybutylene terephthalate, polyethylene naphthalate, polyvinylpyrrolidone, polyvinylidene chloride, a hydrogenated styrene-butadiene-styrene copolymer, polyurethane, polytetrafluoroethylene, polyvinylidene fluoride, and the like. Further, a copolymer of tetrafluoroethylene, hexafluoroethylene, or the like and a vinyl alcohol, vinyl ester, vinyl ether, vinyl acetal, vinyl butyral, or the like may be used, or a copolymer of a (meth)acrylic acid cycloaliphatic ester and methyl (meth)acrylate, a methyl methacrylate-ethyl acrylate-acrylic acid copolymer, and the like may also be used. Among these, polyurethane is preferred.

The content of the matrix polymer in the optical functional layer is, for example, in the range of 30 to 80% by mass.

Even when a hologram film is used for the functional film in the interlayer film for laminated glass of the present invention, since the shape of the hologram film is maintained appropriately when forming surface roughness on the front surface of the interlayer film for laminated glass, optical distortion can be suppressed and images can be viewed appropriately.

A heat-ray reflective film is a film that has a function of enabling heat rays (for example, infrared rays included in sunlight) to be blocked. The heat-ray reflective film is produced, for example, by forming a film made of a metal compound on a resin film such as a polyethylene terephthalate film.

Even when a heat-ray reflective film is used as the functional film in the interlayer film for laminated glass of the present invention, since the shape of the heat-ray reflective film is maintained appropriately when forming surface roughness on the front surface of the interlayer film for laminated glass, the function of reflecting heat rays can be maintained appropriately.

A light control film is a film that can control the transmittance of light in a specific wavelength region. For example, the transmitted light can be adjusted by blocking light of a specific wavelength.

For example, a polymer dispersed liquid crystal (PDLC) film can be used as the light control film. In addition, polymer network liquid crystal (PNLC) can also be used.

The light control film can be produced using, for example, a material (such as ITO) having a molecular structure that changes when a voltage is applied as the metal compound. For example, when a voltage is applied, light is blocked by changes in the molecular structure, and conversely, when no voltage is applied, light can be allowed to pass through.

Even when a light control film is used as the functional film in the interlayer film for laminated glass of the present invention, since the shape of the light control film is maintained appropriately when forming surface roughness on the front surface of the interlayer film for laminated glass, the function of the light control film can be maintained appropriately.

A solar film is a film that has a function of enabling electricity to be generated using sunlight. The solar film can contain, as the metal compound, a wavelength-converting material that can convert sunlight into light of a specific wavelength to increase power generation efficiency.

Further, a power generating cell having the function of converting light into electricity can be provided on the front surface or a side surface of the solar film.

Specific examples of the power generating cell include a power generating cell that uses a silicon semiconductor such as single crystal silicon, polycrystalline silicon, or amorphous silicon as a photoelectric conversion layer, a power generating cell that uses a compound semiconductor typically of CuInSe, Cu(In,Ga)Se, Ag(In,Ga)Se, CuInS, Cu(In,Ga)S, Ag(In,Ga)S or solid solutions thereof, CIS, CIGS, GaAs, CdTe, and the like as a photoelectric conversion layer, an organic power generating cell that uses an organic material such as an organic pigment in a photoelectric conversion layer, and the like.

Even when a solar film is used as the functional film in the interlayer film for laminated glass of the present invention, since the shape of the solar film is maintained appropriately when forming surface roughness on the front surface of the interlayer film for laminated glass, the function of the solar film can be maintained appropriately.

### (Thickness of functional film)

The thickness of the functional film is not particularly limited, but from the viewpoint of exhibiting the specific function of the functional film, the thickness is preferably 0.05 µm or more, more preferably 1 µm or more, further preferably 10 µm or more, further preferably 30 µm or more, and further preferably 50 µm or more, and is preferably 1000 µm or less, more preferably 700 µm or less, and further preferably 500 µm or less.

In addition, when the interlayer film for laminated glass of the present invention includes a plurality of functional films, the thicknesses of the plurality of functional films may be the same or different.

### (Size and length of functional film)

The size of the functional film is not particularly limited, and can be adjusted as appropriate according to the size of the region in which the specific function of the functional film is to be exhibited and the required size of the laminated glass.

The lower limit of the length of the functional film of the interlayer film for laminated glass of the present invention in the MD direction or TD direction is, for example, 0.1 m, 0.25 m, 0.5 m, or 0.75 m, and the upper limit is, for example, 2 m, 1.5 m, and 1 m.

The length of the functional film of the interlayer film for laminated glass of the present invention in the MD direction is, with respect to the length of the interlayer film for laminated glass of the present invention in the MD direction, for example, 100% or less, 95% or less, 90% or less, or 80% or less, and is 10% or more, 20% or more, 30% or more, 40% or more, or 50% or more.

The length of the functional film of the interlayer film for laminated glass of the present invention in the TD direction is, with respect to the length of the interlayer film for laminated glass of the present invention in the TD direction, for example, 100% or less, 95% or less, 90% or less, or 80% or less, and is 10% or more, 20% or more, 30% or more, 40% or more, or 50% or more.

### (Refractive index)

The average refractive index of the functional film in the present invention, and of the above-described first polymer layer and second polymer layer, is preferably 1.40 or more and 1.60 or less, and more preferably 1.45 or more and 1.55 or less. The average refractive index is an average value that gives consideration to thickness in the refractive index of the functional film, the refractive index of the first polymer layer, and the refractive index of the second polymer layer. Specifically, in a case where the refractive index of the functional film is na, and its thickness ta, the refractive index of the first polymer layer is nb and its thickness tb, and the refractive index of the second polymer layer is nc and its thickness tc, the average refractive index is calculated as (na·ta+nb·tb+nc·tc)/(ta+tb+tc).

When the functional film and the first polymer layer and/or second polymer layer are bonded together to form a laminated body, the refractive index of the laminated body is taken as the average refractive index.

By adjusting the refractive index in this way, the refractive index is close to the refractive index of glass (1.52), so for example, double images when the interlayer film for laminated glass us used in a HUD (head-up display) can be effectively prevented.

The refractive index can be measured in accordance with JIS K 7142.

### [Method for producing interlayer film for laminated glass]

The interlayer film for laminated glass of the present invention is produced by preparing each polymer layer and functional film, stacking the prepared polymer layer(s) and functional film(s), laminating them together by applying heat to form a laminated body, and then imparting a specific surface roughness to the laminated body. The surface roughness may be imparted at the same time as the polymer layer(s) and functional film(s) are laminated by heat. That is, surface roughness may be imparted after laminating the polymer layer(s) and functional film(s), or at the same time as laminating. The lamination method is not particularly limited. Each polymer layer and functional film may be prepared individually and then laminated, or a coextruder or the like may be used to obtain a multilayer polymer film, and that multilayer polymer film may be laminated with the functional film(s) and other optionally-used polymer layers that have been prepared.

Alternatively, the interlayer film for laminated glass can be prepared by applying a polymer composition for forming a polymer layer on the front surface of a functional film to form a polymer layer, obtaining a laminated body, and imparting a specific surface roughness to the laminated body. The method for imparting surface roughness will now be described.

In the interlayer film for laminated glass of the present invention, it is preferred to impart roughness onto the front surface of the polymer layer by any of the following methods (1) to (3).
(1) A method of transferring a roughness profile of a protective release film.
(2) A method of transferring a roughness profile of an engraving roll
(3) A method of transferring a roughness profile of an engraving plate.

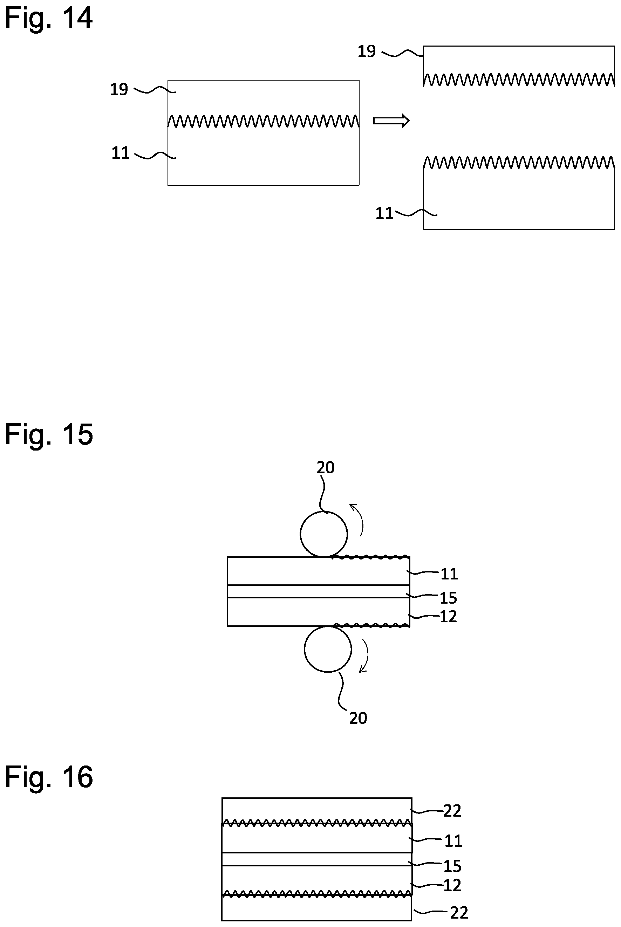

Method (1) is a method which attaches a protective release film having a surface roughness (Rzjis94) on at least one front surface of 1 µm or more and 100 µm or less to the front surface of the polymer layer of the laminated body to transfer the roughness profile of the protective release film. For example, as shown in Fig. 14, a certain level of surface roughness can be formed on the front surface of the polymer layer 11 by attaching a protective release film 19 having a certain level of surface roughness on one side onto the front surface of the polymer layer 11, and after a certain period of time has elapsed, peeling off the protective release film 19.

According to this method, it is possible to protect the front surface of the polymer layer and form surface roughness at the same time. Moreover, this method is simpler than a method of imparting surface roughness using rolls, plates, or the like.

Method (2) is a method which uses an engraving roll having a surface roughness (Rzjis94) of 1 µm or more and 100 µm or less to transfer the roughness profile of the engraving roll onto the front surface of the polymer layer. For example, as shown in Fig. 15, a certain level of surface roughness can be formed on the front surface of the polymer layer 11 and polymer layer 12 by placing the interlayer film for laminated glass between and in contact with two engraving rolls 20 having a certain level of surface roughness, and then rotating the two engraving rolls 20. In method (2), a certain level of surface roughness can be imparted onto the front surface of the polymer layer by the rotation of the engraving rolls 20, which allows the interlayer film for laminated glass to be produced continuously, resulting in excellent productivity.

Method (3) is a method which uses an engraving plate 22 having a surface roughness (Rzjis94) of 1 µm or more and 100 µm or less to transfer the roughness profile of the engraving plate onto the front surface of the polymer layer. For example, as shown in Fig. 16, a certain level of surface roughness can be formed on the front surface of the polymer layer 11 and polymer layer 12 by placing the interlayer film for laminated glass between two engraving plates 22 having a certain level of surface roughness and pressing the two engraving plates 22 together.

The surface roughness (Rzjis94) of the protective release film, engraving roll, and engraving plate is preferably 5 µm or more, more preferably 10 µm or more, further preferably 15 µm or more, further preferably 20 µm or more, further preferably 25 µm or more, further preferably 30 µm or more, and further preferably 40 µm or more. Further, the surface roughness (Rzjis94) of the protective release film, engraving roll, and engraving plate is preferably 90 µm or less, more preferably 80 µm or less, further preferably 70 µm or less, and further preferably 60 µm or less.

The method for imparting roughness onto the front surface of the polymer layer may be a method other than the above-described methods (1) to (3). For example, surface roughness may be imparted by laser engraving in which the front surface of the polymer layer is irradiated with laser light. Further, surface roughness may be imparted onto the front surface of the polymer layer by applying a polymer on the front surface of the polymer layer. The type of polymer to be applied is preferably the same as the type of the polymer constituting the polymer layer.

### (Transmittance)

In the interlayer film for laminated glass of the present invention, the visible light transmittance of laminated glass produced by adhering together two sheets of reference glass with the interlayer film for laminated glass arranged between them is preferably 1% or more, more preferably 5% or more, further preferably 10% or more, further preferably 20% or more, further preferably 30% or more, further preferably 40% or more, and further preferably 50% or more.

Further, the visible light transmittance is preferably 100% or less, more preferably 95% or less, further preferably 90% or less, further preferably 85% or less, further preferably 80% or less, further preferably 75% or less, and further preferably 70% or less.

The visible light transmittance can be determined by measuring in accordance with JIS R3212 (2015) using clear glass as the reference glass.

### <Laminated glass>

The present invention further provides laminated glass. The laminated glass of the present invention includes a pair of glass members and an interlayer film for laminated glass arranged between the pair of glass members.

### (Glass members)

As the glass members used in the laminated glass, a glass sheet of either curved glass or flat glass can be used.

The glass sheet may be either an inorganic glass or an organic glass, but an inorganic glass is preferable. Examples of the inorganic glass include, but are not particularly limited to, clear glass, clear float glass, float glass, tempered glass, colored glass, polished glass, patterned glass, wired glass, lined glass, ultraviolet absorbing glass, infrared reflecting glass, infrared absorbing glass, green glass, and the like.

Further, as the organic glass, a glass that is generally referred to as "resin glass" is used. Examples thereof include, but are not particularly limited to, organic glass constituted from a polycarbonate sheet, a polymethyl methacrylate sheet, a polyester sheet or the like.

Two sheets of glass members may be made of the same kind of material or may be made of different materials. For example, one of the laminated glass members may be an inorganic glass and the other laminated glass member an organic glass, but it is preferred that the two sheets of glass members are both either an inorganic glass or an organic glass.

The thickness of each of the glass members is not particularly limited, but is preferably 0.5 mm or more and 5 mm or less, and more preferably 0.7 mm or more and 3 mm or less.

The method for producing the laminated glass is not particularly limited. For example, the laminated glass may be obtained by sandwiching an interlayer film for laminated glass between two laminated glass members, and removing the air remaining between the two glass members and the interlayer film for laminated glass by passing through a pressure roll or placing in a rubber bag and vacuum suctioning. Then, the laminated glass members and the interlayer film are preliminarily adhered at about 70 to 110°C to obtain a laminated body. Next, the laminated body is placed in an autoclave or pressed and pressure-bonded at about 120 to 150°C and a pressure of 1 to 1.5 MPa. In this way, the laminated glass can be obtained.

The laminated glass of the present invention can be used in various fields, for example, can be used for various types of window glass. More specifically, the laminated glass of the present invention can be used for the window glass of a vehicle such as an automobile, a railway carriage, an aircraft, and a ship, or for the window glass of a building. By using the interlayer film for laminated glass or laminated glass for various types of window glass, various images such as videos, messages, and logos can be displayed on window glass. Further, the laminated glass of the present invention may be used as a display for various electrical appliances, such as household electrical appliances. Among these uses, it is preferable to use the laminated glass of the present invention for window glass, and more preferably to use for the window glass of an automobile. Examples of the window glass of an automobile include any of a windshield, side window glass, and rear window glass.

For example, when used for window glass of a building, various images may be displayed by installing a light source device inside the building and irradiating the surface on the inner side of the window glass with light from the light source device. Similarly, when used for the window glass of a vehicle, it is preferable that the laminated glass of the present invention is used for a head-up display that displays various images on the laminated glass.

### Examples

The present invention will now be explained in more detail with reference to examples, but the present invention is not limited to these examples in any way.

The various physical properties were measured and evaluated as follows.

### [Thickness of each resin layer and functional film]

The thickness of each resin layer was measured using a microscope "DSX500" manufactured by Olympus through the ten-point average.

### [Surface roughness]

The ten-point average roughness Rz of the polymer layer of the surface layer of the interlayer film for laminated glass was measured with a "Surfcorder SE500A" manufactured by Kosaka Laboratory Ltd. using a stylus with a tip radius of 2 µm and a tip angle of 90° under measurement conditions of a cutoff value of 2.5 mm at the time of measurement, a reference length of 2.5 mm, a measurement length of 12.5 mm, a preliminary length of 2.5 mm, and a stylus movement rate of 0.5 mm/sec. The measurement was carried out in an environment of 23°C and 30 RH%.

### [Proportion of thickness curve B ±50 µm region]

The proportion of the region where the displacement in the thickness of the thickness distribution curve A with respect to the thickness of the thickness distribution curve B was within 50 µm was calculated by on the method described herein.

### [Region with functional film]

When looking at the interlayer film for laminated glass in the thickness direction, the proportion of the region where the functional film is present relative to the region where the interlayer film for laminated glass is present was calculated.

### [Evaluation of bubble formation]

Bubble formation was evaluated based on the amount of bubbles when the laminated glass was produced.

A visual observation was conducted by 100 people, and a determination was made based on the number of people who determined that the amount of bubbles was unacceptably large for use as laminated glass.
AA: Less than 10 people
A: 10 people or more and less than 30 people
B: 30 people or more and less than 70 people
C: 70 or more people

### [Evaluation of optical distortion]

When the laminated glass was produced, whether the view through the laminated glass would be distorted was checked. In the table, the symbol "-" means that the amount of bubbles was large and it was difficult to see through the laminated glass, making it impossible to evaluate optical distortion. That is, "-" indicates a worse result than "B".

Observations were conducted by 100 people, and optical distortion was evaluated based on the number of people who determined that the view was distorted.
AA: Less than 20 people
A: 20 people or more and less than 70 people
B: 70 or more people

The components used in each example and comparative example were as follows.

### (Polyvinyl acetal resin)

PVB 1: Polyvinyl butyral resin, average degree of polymerization 1700, hydroxyl group amount 30.3 mol%, acetylation degree 0.9 mol%, acetalization degree 68.8 mol%
PVB 2: Polyvinyl butyral resin, average degree of polymerization 3000, hydroxyl group amount 23.8 mol%, acetylation degree 12.4 mol%, acetalization degree 63.8 mol%

### (Plasticizer)

3GO: Triethylene glycol-di-2-ethylhexanoate

### (UV shielding agent)

Tinuvin 326 (manufactured by BASF)

### (Antioxidant)

BHT (2,6-di-t-butyl-p-cresol)

### <Production of polymer layer A1>

A resin composition was obtained by mixing 100 parts by mass of PVB 1, 40 parts by mass of plasticizer (3GO), 0.2 parts by mass of UV shielding agent (Tinuvin 326), and 0.2 parts by mass of antioxidant (BHT). The resin composition was extruded using an extruder to obtain a polymer layer A1. The glass transition temperature of the polymer layer A1 was 27°C.

### <Production of polymer layer A2>

A resin composition was obtained by mixing 100 parts by mass of PVB 2, 60 parts by mass of plasticizer (3GO), 0.2 parts by mass of UV shielding agent (Tinuvin 326), and 0.2 parts by mass of antioxidant (BHT). The resin composition was extruded using an extruder to obtain a polymer layer A2. The glass transition temperature of the polymer layer A2 was -4°C.

### <Functional film used>

| | |
|---|---|
| F1: | P-polarized light reflective film, three thickness types: 50 µm, 100 µm, 400 µm A reflective film having a predetermined thickness obtained by coating a PET film with titania was used. |
| F2: | Heat-ray reflective film, two thickness types: 50 µm and 100 µm Nano 90S manufactured by 3M was used. |
| F3: | Hologram film, two thickness types: 300 µm and 310 µm |

An optical functional layer composition containing an acrylic monomer as a photoreactive monomer, polyurethane as a matrix polymer, a photopolymerization initiator, and a dye was applied to a TAC (cellulose triacetate) film with a thickness of 300 µm and 310 µm as a substrate, and then dried to obtain a 3 µm-thick optical functional layer laminated on one side of the substrate. Next, the optical functional layer was exposed using a laser light source having a wavelength of 532 nm to cause the photoreactive monomer to react and polymerize. During exposure, light waves from two directions were caused to interfere with each other on the optical functional layer, thereby creating a hologram film.

| | |
|---|---|
| F4: | Light control film, one thickness type of 400 µm A polymer-dispersed liquid crystal film manufactured by Gauzy was used. |

### <Embossing method>

The following method was used to impart surface roughness onto the front surface of the polymer layer of the front surface or back surface of the interlayer film for laminated glass.

| | |
|---|---|
| M1: | Method using a protective release film having a specific surface roughness |
| M2: | Method using an engraving roll having a specific surface roughness |
| M3: | Method using an engraving plate having a specific surface roughness |

### <Embossed shape>

The shape of the surface roughness formed on the front surface of the polymer layer was as follows.

| | |
|---|---|
| P1: | Shape of P1 shown in Fig. 2 |
| P2: | Shape of P2 shown in Fig. 2 |
| P3: | Shape of P3 shown in Fig. 2 |
| P4: | Shape of P4 shown in Fig. 2 |
| P5: | Shape of P5 shown in Fig. 2 |

### <Method for producing laminated glass>

Transparent clear glass sheets (50 mm long × 50 mm wide × 2.5 mm thick, visible light transmittance 90.4%) were stacked on both sides of the interlayer film for laminated glass produced in each example and comparative example to form a laminated body. The obtained laminated body was placed in a rubber bag, the rubber bag was connected to a suction vacuum system, the laminated body was held under a reduced pressure of -600 mmHg (absolute pressure 160 mmHg) for 10 minutes while simultaneously heating at an outside air heating temperature to heat the laminated body to a temperature (preliminary pressure-bonding temperature) of 60°C, and the pressure was then returned to atmospheric pressure to carry out preliminary pressure bonding. The preliminarily pressed laminated body was held in an autoclave at a temperature of 140°C and a pressure of 1.3 MPa for 10 minutes, and then the temperature was lowered to 50°C and the pressure was returned to atmospheric pressure to complete the main pressure-bonding, thereby obtaining laminated glass.

### [Examples 1 to 3]

A polymer layer A1 and a functional film F1 were prepared. These were then laminated by heat to obtain an interlayer film for laminated glass in which the polymer layer A1 and functional film F1 were laminated. Next, surface roughness was formed on the polymer layer of the surface layer using the embossing method and embossed shape shown in Table 1. The evaluation results are shown in Table 1.

### [Comparative Example 1]

A polymer layer A1 and a functional film F1 were laminated by heat to obtain an interlayer film for laminated glass in which the polymer layer A1 and functional film F1 were laminated. It is noted that, as shown in Table 1, the interlayer film for laminated glass of Comparative Example 1 had release films attached to the front surface and back surface, but the release films used in Comparative Example 1 had a smooth front surface. The evaluation results are shown in Table 1.

### [Examples 4 to 6]

A polymer layer A1, a functional film F1, a polymer layer A1, a polymer layer A2, and a polymer layer A1 were prepared. These were then laminated by heat to obtain an interlayer film for laminated glass in which the polymer layer A1, functional film F1, polymer layer A1, polymer layer A2, and polymer layer A1 were laminated in that order. Next, surface roughness was formed on the polymer layer of the surface layer using the embossing method and embossed shape shown in Table 1. The evaluation results are shown in Table 1.

### [Comparative Example 2]

A polymer layer A1, a functional film F1, a polymer layer A1, a polymer layer A2, and a polymer layer A1 were prepared. These were then laminated by heat to obtain an interlayer film for laminated glass in which the polymer layer A1, functional film F1, polymer layer A1, polymer layer A2, and polymer layer A1 were laminated in that order. It is noted that, as shown in Table 1, the interlayer film for laminated glass of Comparative Example 2 had a release film attached to the front surface, but the release film used in Comparative Example 2 had a smooth front surface. The evaluation results are shown in Table 1.

### [Examples 7 to 9]

A polymer layer A1, a functional film F2, and a polymer layer A1 were prepared. These were then laminated by heat to obtain an interlayer film for laminated glass in which the polymer layer A1, functional film F2, and polymer layer A1 were laminated in that order. Next, surface roughness was formed on the polymer layer of the surface layer using the embossing method and embossed shape shown in Table 1. The evaluation results are shown in Table 1.

### [Comparative Example 3]

A polymer layer A1, a functional film F2, and a polymer layer A1, were prepared. These were then laminated by heat to obtain an interlayer film for laminated glass in which the polymer layer A1, functional film F2, and polymer layer A1 were laminated in that order. The evaluation results are shown in Table 1.

### [Examples 10 to 12]

A polymer layer A1, a functional film F2, and a polymer layer A1 were prepared. These were then laminated by heat to obtain an interlayer film for laminated glass in which the polymer layer A1, functional film F2, and polymer layer A1 were laminated in that order. Next, surface roughness was formed on the polymer layer of the surface layer using the embossing method and embossed shape shown in Table 1. In Examples 10 to 12, the embossing was formed using an engraving roll, but engraving rolls of which surface roughness was less uniform than the one used in other examples were used. The evaluation results are shown in Table 1.

### [Examples 13 to 15]

A polymer layer A1, a functional film F2, a polymer layer A1, a functional film F3, and a polymer layer A1 were prepared. These were then laminated by heat to obtain an interlayer film for laminated glass in which the polymer layer A1, functional film F2, polymer layer A1, functional film F3, and polymer layer A1 were laminated in that order. Next, surface roughness was formed on the polymer layer of the surface layer using the embossing method and embossed shape shown in Table 2. The evaluation results are shown in Table 2.

### [Comparative Example 4]

A polymer layer A1, a functional film F2, a polymer layer A1, a functional film F3, and a polymer layer A1 were prepared. These were then laminated by heat to obtain an interlayer film for laminated glass in which the polymer layer A1, functional film F2, polymer layer A1, functional film F3, and polymer layer A1 were laminated in that order. The evaluation results are shown in Table 2.

### [Examples 16 to 20]

A resin composition for forming a polymer layer A1 and a resin composition for forming a polymer layer A2 were each coextruded using a coextruder to obtain a multilayer polymer film having a three-layer structure in which the polymer layer A1, polymer layer A2, and polymer layer A1 were laminated in that order. A separately-prepared polymer layer A1 and separately-prepared functional film F4, and the multilayer polymer film having a three-layer structure prepared as described above were stacked and then laminated by heat to obtain an interlayer film for laminated glass in which the polymer layer A1, functional film F4, polymer layer A1, polymer layer A2, and polymer layer A1 were laminated in that order. Note that in Examples 19 and 20, the pressing time during lamination was set shorter than in the other examples. Next, surface roughness was formed on the polymer layer of the surface layer using the embossing method and embossed shape shown in Table 2. The evaluation results are shown in Table 2.

Note that it was confirmed that the interlayer film for laminated glass of Example 19 had an air layer between the polymer layer A1 of the surface layer and the functional film F4, and it was confirmed that the interlayer film for laminated glass of Example 20 had an air layer between the polymer layer A1 of the surface layer and the functional film F4 and between the functional film F4 and the internal polymer layer A1.

### [Comparative Example 5]

A polymer layer A1, a functional film F4, a polymer layer A1, a polymer layer A2, and a polymer layer A1 were prepared. These were then laminated by heat to obtain an interlayer film for laminated glass in which the polymer layer A1, functional film F4, polymer layer A1, polymer layer A2, and polymer layer A1 were laminated in that order. The evaluation results are shown in Table 2.

### [Examples 21 to 22]

An embossed plate, a polymer layer A1, a functional film F1, a polymer layer A1, a polymer layer A2, a polymer layer A1, and an embossed plate were prepared. These were then laminated by heat to obtain an interlayer film for laminated glass in which polymer layer A1, functional film F1, polymer layer A1, polymer layer A2, and polymer layer A1 were laminated in that order, and at the same time, surface roughness was formed on the polymer layer of the surface layer by the embossed shape shown in Table 2. It is noted that the functional film F1 that was used had a smaller size than each of the polymer layers. The evaluation results are shown in Table 2.

### [Comparative Example 6]

A polymer layer A1, a functional film F1, a polymer layer A1, a polymer layer A2, and a polymer layer A1 were prepared. These were then laminated by heat to obtain an interlayer film for laminated glass in which the polymer layer A1, functional film F1, polymer layer A1, polymer layer A2, and polymer layer A1 were laminated in that order. It is noted that the functional film F1 that was used had a smaller size than each of the polymer layers. The evaluation results are shown in Table 2.

### [Example 23]

A polymer layer A1, a functional film F1, and a polymer layer A1 were prepared. These were then laminated by heat to obtain an interlayer film for laminated glass in which the polymer layer A1, functional film F1, and polymer layer A1 were laminated in that order. It is noted that the wedge-shaped polymer layer having a thickness of 1260 µm at its thickest portion and making a wedge angle of the interlayer film for laminated glass 0.5 mrad was used as a polymer layer of the back surface side.

**Table 1**

| | | Comparative Example 1 | Example 1 | Example 2 | Example 3 | Comparative Example 2 | Example 4 | Example 5 | Example 6 | Comparative Example 3 | Example 7 | Example 8 | Example 9 | Example 10 | Example 11 | Example 12 |
|---|---|---|---|---|---|---|---|---|---|---|---|---|---|---|---|---|
| Layer structure of interlayer film for laminated glass | Layer 1 | A1 | A1 | A1 | A1 | A1 | A1 | A1 | A1 | A1 | A1 | A1 | A1 | A1 | A1 | A1 |
| | Layer 2 | F1 | F1 | F1 | F1 | F1 | F1 | F1 | F1 | F2 | F2 | F2 | F2 | F2 | F2 | F2 |
| | Layer 3 | - | - | - | - | A1 | A1 | A1 | A1 | A1 | A1 | A1 | A1 | A1 | A1 | A1 |
| | Layer 4 | - | - | - | - | A2 | A2 | A2 | A2 | - | - | - | - | - | - | - |
| | Layer 5 | - | - | - | - | A1 | A1 | A1 | A1 | - | - | - | - | - | - | - |
| Thickness (µm) | Layer 1 | 30 | 30 | 30 | 30 | 30 | 30 | 30 | 30 | 300 | 300 | 300 | 300 | 300 | 300 | 300 |
| | Layer 2 | 50 | 50 | 50 | 50 | 50 | 50 | 50 | 50 | 100 | 100 | 100 | 100 | 100 | 100 | 100 |
| | Layer 3 | - | - | - | - | 350 | 350 | 350 | 350 | 350 | 350 | 350 | 350 | 350 | 350 | 350 |
| | Layer 4 | - | - | - | - | 100 | 100 | 100 | 100 | - | - | - | - | - | - | - |
| | Layer 5 | - | - | - | - | 350 | 350 | 350 | 350 | - | - | - | - | - | - | - |
| | All layers | 80 | 80 | 80 | 80 | 880 | 880 | 880 | 880 | 750 | 750 | 750 | 750 | 750 | 750 | 750 |
| Air layer | | - | - | - | - | - | - | - | - | - | - | - | - | - | - | - |
| Presence/absence of release film | Front surface | present | present | present | present | present | present | present | present | absent | absent | absent | absent | absent | absent | absent |
| | Back surface | present | present | present | present | absent | absent | absent | absent | absent | absent | absent | absent | absent | absent | absent |
| Embossing method | Front surface | - | M1 | M1 | M1 | - | M1 | M1 | M1 | - | M2 | M2 | M2 | M2 | M2 | M2 |
| | Back surface | - | - | - | - | - | M2 | M2 | M2 | - | M2 | M2 | M2 | M2 | M2 | M2 |
| Embossed shape | Front surface | - | P1 | P1 | P1 | - | P1 | P1 | P1 | - | P2 | P2 | P2 | P2 | P2 | P2 |
| | Back surface | - | - | - | - | - | P4 | P4 | P4 | - | P2 | P2 | P2 | P2 | P2 | P2 |
| Surface roughness (µm) | Front surface | 0 | 12 | 19 | 25 | 0 | 12 | 19 | 25 | 0 | 19 | 30 | 65 | 47 | 48 | 43 |
| | Back surface | - | - | - | - | 0 | 34 | 45 | 50 | 0 | 35 | 44 | 60 | 43 | 49 | 44 |
| Thickness curve B ±50 µm region | % | 100 | 100 | 100 | 100 | 100 | 100 | 100 | 100 | 100 | 100 | 100 | 100 | 71 | 81 | 91 |
| Region with functional film | % | 100 | 100 | 100 | 100 | 100 | 100 | 100 | 100 | 100 | 100 | 100 | 100 | 100 | 100 | 100 |
| Evaluation | Bubble formation | C | B | B | A | C | B | B | A | C | B | A | AA | B | A | AA |
| | Optical distortion | - | B | B | B | - | B | B | B | - | AA | AA | A | AA | AA | AA |

| | | | | | | | | | | | | | | | | |
|---|---|---|---|---|---|---|---|---|---|---|---|---|---|---|---|---|
| *The outer surface of layer 1 is taken as the front layer, and the outer surface of a layer on the opposite side to layer 1 is taken as the back layer. | | | | | | | | | | | | | | | | |

**Table 2**

| | | Comparative Example 4 | Example 13 | Example 14 | Example 15 | Comparative Example 5 | Example 16 | Example 17 | Example 18 | Example 19 | Example 20 | Comparative Example 6 | Example 21 | Example 22 | Example 23 |
|---|---|---|---|---|---|---|---|---|---|---|---|---|---|---|---|
| Layer structure of interlayer film for laminated glass | Layer 1 | A1 | A1 | A1 | A1 | A1 | A1 | A1 | A1 | A1 | A1 | A1 | A1 | A1 | A1 |
| | Layer 2 | F2 | F2 | F2 | F2 | F4 | F4 | F4 | F4 | F4 | F4 | F1 | F1 | F1 | F1 |
| | Layer 3 | A1 | A1 | A1 | A1 | A1 | A1 | A1 | A1 | A1 | A1 | A1 | A1 | A1 | A1 |
| | Layer 4 | F3 | F3 | F3 | F3 | A2 | A2 | A2 | A2 | A2 | A2 | A2 | A2 | A2 | - |
| | Layer 5 | A1 | A1 | A1 | A1 | A1 | A1 | A1 | A1 | A1 | A1 | A1 | A1 | A1 | - |
| Thickness | Layer 1 | 300 | 300 | 300 | 300 | 380 | 380 | 380 | 380 | 380 | 380 | 380 | 380 | 380 | 200 |
| | Layer 2 | 50 | 50 | 50 | 50 | 400 | 400 | 400 | 400 | 400 | 400 | 400 | 400 | 400 | 100 |
| | Layer 3 | 300 | 270 | 270 | 270 | 200 | 200 | 200 | 200 | 200 | 200 | 200 | 200 | 200 | 1260W |
| | Layer 4 | 50 | 50 | 50 | 50 | 100 | 100 | 100 | 100 | 100 | 100 | 100 | 100 | 100 | - |
| | Layer 5 | 300 | 310 | 310 | 310 | 200 | 200 | 200 | 200 | 200 | 200 | 200 | 200 | 200 | - |
| | All layers | 1000 | 980 | 980 | 980 | 1280 | 1280 | 1280 | 1280 | 1280 | 1280 | 1280 | 1280 | 1280 | 1560 |
| Air layer | | - | - | - | - | - | - | - | - | 1-2 | 1-2 and 1-3 | - | - | - | - |
| Presence/absence of release film | Front surface | absent | absent | absent | absent | absent | absent | absent | absent | absent | absent | absent | absent | absent | absent |
| | Back surface | absent | absent | absent | absent | absent | absent | absent | absent | absent | absent | absent | absent | absent | absent |
| Embossing method | Front surface | - | M2 | M2 | M2 | - | M3 | M3 | M3 | M3 | M3 | - | M3 | M3 | M2 |
| | Back surface | - | M2 | M2 | M2 | - | M3 | M3 | M3 | M3 | M3 | - | M3 | M3 | M2 |
| Embossed shape | Front surface | - | P3 | P3 | P5 | - | P4 | P4 | P4 | P4 | P4 | - | P4 | P4 | P4 |
| | Back surface | - | P3 | P3 | P5 | - | P4 | P4 | P4 | P4 | P4 | - | P4 | P4 | P4 |
| Surface roughness (µm) | Front surface | 0 | 22 | 30 | 59 | 0 | 23 | 39 | 40 | 44 | 40 | 0 | 44 | 40 | 45 |
| | Back surface | 0 | 33 | 35 | 62 | 0 | 22 | 43 | 58 | 50 | 47 | 0 | 50 | 47 | 45 |
| Thickness curve B ±50 µm region | % | 100 | 100 | 100 | 100 | 100 | 100 | 100 | 100 | 100 | 100 | 100 | 100 | 100 | 100 |
| Region with functional film | % | 100 | 100 | 100 | 100 | 100 | 100 | 100 | 100 | 100 | 100 | 65 | 65 | 65 | 90 |
| Evaluation | Bubble formation | C | B | A | AA | C | B | A | AA | AA | AA | C | B | A | AA |
| | Optical distortion | - | AA | AA | A | - | AA | AA | AA | AA | AA | - | AA | AA | A |

| | | | | | | | | | | | | | | | |
|---|---|---|---|---|---|---|---|---|---|---|---|---|---|---|---|
| *The outer surface of layer 1 is taken as the front layer, and the outer surface of a layer on the opposite side to layer 1 is taken as the back layer. | | | | | | | | | | | | | | | |

As described above, the laminated glass of each example including the interlayer film for laminated glass of the present invention was found to have excellent degassing properties due to having a surface roughness of the first polymer layer within a predetermined range, a good evaluation regarding optical distortion, and the function of the functional film was not impaired.

### Reference Signs List

- 10: interlayer film for laminated glass
- 11: first polymer layer
- 12: second polymer layer
- 13: internal polymer layer
- 14: internal polymer layer
- 15: functional film
- 16: functional film
- 17: polymer layer
- 18: air layer
- 19: protective release film
- 20: engraving roll
- 21: wedge-shaped polymer layer
- 22: engraving plate

## Claims

1. An interlayer film for laminated glass comprising:
a functional film; and
a first polymer layer that is provided on one front surface side of the functional film and constitutes an outermost layer,
an outer surface of the first polymer layer having a surface roughness (Rzjis94) of 1 µm or more and 100 µm or less.

2. The interlayer film for laminated glass according to claim 1, comprising a second polymer layer that constitutes an outermost layer on a side opposite to the first polymer layer, wherein an outer surface of the second polymer layer has a surface roughness (Rzjis94) of 1 µm or more and 100 µm or less.

3. The interlayer film for laminated glass according to claim 1 or 2, comprising three or more polymer layers.

4. The interlayer film for laminated glass according to claim 2, wherein a difference in surface roughness (Ra) of the outer surface of the first polymer layer and the outer surface of the second polymer layer is 1 µm or more.

5. The interlayer film for laminated glass according to claim 2, wherein a difference in thickness between the first polymer layer and the second polymer layer is 1 µm or more and 1000 µm or less.

6. The interlayer film for laminated glass according to claim 1 or 2, wherein the first polymer layer and/or the second polymer layer comprises at least one thermoplastic resin selected from the group consisting of a polyvinyl acetal resin and an ethylene-vinyl acetate copolymer resin.

7. The interlayer film for laminated glass according to claim 1 or 2, wherein at least one polymer layer of the polymer layers included in the interlayer film for laminated glass has a different thickness at one end from the thickness at the other end.

8. The interlayer film for laminated glass according to claim 1 or 2, wherein the functional film is a film having a function of absorbing or reflecting specific light.

9. The interlayer film for laminated glass according to claim 1 or 2, wherein the functional film comprises a polyethylene terephthalate resin.

10. The interlayer film for laminated glass according to claim 1 or 2, wherein the functional film comprises a metal compound.

11. The interlayer film for laminated glass according to claim 1 or 2, wherein the functional film comprises a P-polarized light reflective film, a hologram film, a heat-ray reflective film, a light control film, or a solar film.

12. The interlayer film for laminated glass according to claim 2, wherein the outer surface of the first polymer layer and the outer surface of the second polymer layer have a regular shape or a random shape.

13. The interlayer film for laminated glass according to claim 1 or 2, wherein at least one front surface is protected by a protective release film.

14. The interlayer film for laminated glass according to claim 1 or 2, wherein the protective release film has a surface roughness (Rzjis94) of 1 µm or more and 100 µm or less.

15. The interlayer film for laminated glass according to claim 1 or 2, wherein when a thickness distribution curve A obtained by measuring the thickness at equal intervals in a region of 80% of the region including the functional film is compared with a thickness distribution curve B, which is a smoothed thickness distribution curve obtained by subjecting the thickness distribution curve A to moving average processing, the interlayer film has a region, where an absolute value of a displacement in the thickness of the thickness distribution curve A with respect to the thickness of the thickness distribution curve B is 50 µm or less, of 70% or more.

16. The interlayer film for laminated glass according to claim 1 or 2, wherein the functional film has a thickness of 0.05 µm or more.

17. The interlayer film for laminated glass according to claim 1 or 2, comprising a polymer layer having a glass transition temperature (Tg) of less than 15°C.

18. The interlayer film for laminated glass according to claim 2, wherein the functional film, the first polymer layer, and the second polymer layer have an average refractive index of 1.40 or more and 1.60 or less.

19. The interlayer film for laminated glass according to claim 1 or 2, on which product information is printed.

20. The interlayer film for laminated glass according to claim 1 or 2, wherein a proportion of the area of the functional film to the area of the interlayer film for laminated glass when viewed from a thickness direction is 50% or more.

21. The interlayer film for laminated glass according to claim 1 or 2, comprising an air layer between the functional film and a polymer layer.

22. Laminated glass comprising:
the interlayer film for laminated glass according to claim 1 or 2; and
a pair of laminated glass members, wherein
the interlayer film for laminated glass is arranged between the pair of laminated glass members, and the laminated glass members are either curved glass or flat glass.

23. A method for producing the interlayer film for laminated glass according to claim 1 or 2, wherein roughness is imparted on the front surface of the polymer layer by any of the following methods (1) to (3):
(1) a method of transferring a roughness profile of a protective release film;
(2) a method of transferring a roughness profile of an engraving roll; and
(3) a method of transferring a roughness profile of an engraving plate.
